# EUROPEAN PATENT SPECIFICATION

(11) **EP 3 971 793 B1**
(45) Date of publication and mention of the grant of the patent: **04.11.2026**
(21) Application number: 20382822.3
(22) Date of filing: 17.09.2020
(51) Int. Cl.: G06N 10/60, G06F 17/13

(54) **QUANTUM COMPUTER-IMPLEMENTED METHOD FOR SOLVING A PARTIAL DIFFERENTIAL EQUATION**
QUANTENCOMPUTERIMPLEMENTIERTES VERFAHREN ZUR LÖSUNG EINER PARTIELLEN DIFFERENTIALGLEICHUNG
PROCÉDÉ MIS EN UVRE PAR ORDINATEUR QUANTIQUE POUR RÉSOUDRE UNE ÉQUATION DIFFÉRENTIELLE PARTIELLE

(43) Date of publication of application: 23.03.2022
(73) Proprietor: IQM Germany GmbH, 80636 Munchen (DE); University of the Basque Country, 48940 Leioa Bizkaia (ES)
(72) Inventor: Rodríguez-Rozas, Ángel, 80636 Munchen (DE); Sanz, Mikel, 48940 Leioa- Bizkaia (ES); Solano, Enrique, 48940 Leioa- Bizkaia (ES); Gonzalez-Conde, Javier, 48940 Leioa- Bizkaia (ES)
(74) Representative: Leinweber & Zimmermann

(56) References cited:
- FILIPE FONTANELA ET AL: "A Quantum algorithm for linear PDEs arising in Finance", ARXIV.ORG, CORNELL UNIVERSITY LIBRARY, 201 OLIN LIBRARY CORNELL UNIVERSITY ITHACA, NY 14853, 5 December 2019 (2019-12-05), XP081546076
- ANDREW M CHILDS ET AL: "High-precision quantum algorithms for partial differential equations", ARXIV.ORG, CORNELL UNIVERSITY LIBRARY, 201 OLIN LIBRARY CORNELL UNIVERSITY ITHACA, NY 14853, 18 February 2020 (2020-02-18), XP081603427
- YUDONG CAO ET AL: "Quantum algorithm and circuit design solving the Poisson equation", NEW JOURNAL OF PHYSICS, INSTITUTE OF PHYSICS PUBLISHING, BRISTOL, GB, vol. 15, no. 1, 11 January 2013 (2013-01-11), pages 13021, XP020236822, ISSN: 1367-2630, DOI: 10.1088/1367-2630/15/1/013021
- NIKITAS STAMATOPOULOS ET AL: "Option Pricing using Quantum Computers", ARXIV.ORG, CORNELL UNIVERSITY LIBRARY, 201 OLIN LIBRARY CORNELL UNIVERSITY ITHACA, NY 14853, 7 May 2019 (2019-05-07), XP081600201

## Description

The present invention is related to a quantum computer-implemented method for solving a partial differential equation for a function f which maps at least a subspace of a k-dimensional real space ${ℝ}^{k}$ into at least a subspace of an m-dimensional real space ${ℝ}^{m}$, $f : {ℝ}^{k} \to {ℝ}^{m}$, f: (t, X) ↦ f(t, X), wherein $t ∈ ℝ , X ∈ {ℝ}^{k - 1}$. Furthermore, the present invention is related to an apparatus for solving such a partial differential equation using a quantum computer.

Solving partial differential equations is of utmost importance in many areas, including but not limited to engineering, physics, chemistry, biology and finance. As analytic solutions of partial differential equations exist only in very special cases, there is a high need for the development of efficient and stable numerical methods based on algorithmic techniques.

Standard techniques for solving a partial differential equation for a function f(t,X) use a discretization of the variables t and X. For example, when t is considered as the time, and one is interested in the time evolution of a system, the solution of the partial differential equation, f(tⱼ, X) at a time tⱼ is obtained from the solution of the partial differential equation at earlier times tₖ, wherein k ≤ j-1. In many cases, a complexity arises when the time evolution should be approximated for long times and at high accuracy. A discretization which is using a mesh of 2^{N} points (tᵢ, Xₗ), I = 1, ..., 2^{N}, quickly becomes computationally costly regarding resources like time and memory.

It is known that, in principle, a quantum computer making use of quantum mechanical principles like the superposition principle and entanglement, may be able to solve certain computational problems more efficiently than a classical computer. However, the development of quantum algorithms is a difficult task. The problem is even more difficult when such an algorithm should be realizable with state of the art quantum computing architectures that comprise only tens of noisy qubits. In Filipe Fontanele et al. "A Quantum algorithm for linear PDEs arising in finance", ARXIV.ORG, CORNELL UNIVERSITY LIBRARY, 201 OLIN LIBRARY CORNELL UNIVERSITY ITHACA, NY 14853, 5 December 2019 (2019-12-05), a hybrid quantum-classical algorithm for solving linear PDEs is proposed. However, this approach does not fully solve a PDE on a quantum computer.

It is therefore an object of the present invention to present a quantum computer-implemented method for solving a certain class of partial differential equations on a quantum computer, and to provide an apparatus for implementing this method.

The invention is set out in the appended set of claims.

Embodiments of the present invention are related to a quantum mechanical system. The state of a quantum mechanical system may be described by a state vector |Ψ(t)〉, wherein t is the time. The dynamics of a quantum mechanical system may be described by the Schrödinger equation $i \frac{d}{dt} \left|Ψ\left(t\right)\right〉 = H \left|Ψ\left(t\right)\right〉$*.* Here, the so-called Hamiltonian H is a hermitian operator. H may be time-dependent or time-independent. In the case of a time-independent Hamiltonian and starting from an initial state vector |ψ₀〉, the solution of the Schrödinger equation may be represented in the form |Ψ(t)〉 = U(t)|-Ψ₀〉, wherein U(t) = e^{-iHt} is a unitary operator.

The present invention is also related to a quantum mechanical system comprising a plurality of qubits. A qubit may refer to a quantum mechanical system comprising a two-level system. The state of the two-level system may be described by basis state vectors |0〉 and 11). The state vector |0〉 may describe the ground state of the quantum mechanical system, and the state vector 11) may describe an excited state of the quantum mechanical system. An arbitrary pure state of a single qubit may be described by a state vector (a |0〉 + b |1〉), which is a linear combination of the basis state vectors wherein a and b are complex numbers. The state of a single qubit may be represented as a point (Θ, φ) on the unit sphere, i. e. the Bloch sphere, where a = cos (Θ/2) and b = exp(iφ) sin (Θ/2). The coefficient a may be taken as real since the overall phase of a quantum state is not observable.

The basis state vectors of a system of N qubits may be of the form |a₁, a₂, ..., aₙ〉 = |a₁〉|a₂〉 ... |a_{N}〉 wherein aₖ = 0 or aₖ = 1. This corresponds to a quantum state where the k-th qubit is in the state described by the state vector |aₖ〉 which is either |0〉 or |1〉. One may introduce the short-hand notation |x〉 for a basis state vector |a₁ ... a_{N}〉, wherein x = a₁2⁰ + a₂·2¹ + ... + a_{N}2^{N-1}. There are 2^{N} basis state vectors for a system of N qubits. Any superposition of the basis state vectors describes a possible quantum state of N qubits. Thus, a system of N qubits may be represented by a vector space of dimension 2^{N}. Physical realizations of N-qubit systems will be explained below.

A system of N qubits may be used for data processing. Information may be encoded in the N-qubit system, the N-qubit system may be manipulated, and a measurement may be carried out on the N-qubit system. The result of the measurement may be related to the result of a certain computational task. In this way, quantum computation may be performed.

According to the first aspect of the present invention, there is provided a quantum computer-implemented method according to claim 1 for solving a special class of partial differential equations for a function f. The function f maps at least a subspace of a k-dimensional real space ${ℝ}^{k}$into at least a subspace of an m-dimensional real space ${ℝ}^{m} , f : {ℝ}^{k} \to {ℝ}^{m}$, f: (t, X) ↦ f(t, X), wherein $t ∈ ℝ$ and $X ∈ {ℝ}^{k - 1}$.

The partial differential equation is representable in the form $\frac{\partial f}{\partial t} = - iQf$ with a given boundary condition f(t₀, X) for some ${t}_{0} ∈ ℝ$, wherein Q is a linear, non-hermitian operator representable as the sum of an anti-hermitian part A and an optional hermitian part H₀. I.e., Q may be the anti-hermitian operator A, Q = A. Alternatively, Q may be the sum of the anti-hermitian part A and a hermitian part H₀, i.e. Q = H₀ + A.

In the case that Q comprises a hermitian part H₀, the hermitian part H₀ and the anti-hermitian part A of the operator Q are such that they commute, i. e. [H₀, A] = 0. An example of a partial differential equation which is representable in the form given above will be explained in more detail below.

In one example, one may interpret the variable t as the time, such that the partial differential equation describes the time evolution of the function f. If Q was a hermitian operator, the above equation would have the form of the Schrödinger equation and thus describe the dynamics of a quantum system. However, since Q is a non-hermitian operator, this interpretation is not possible.

The boundary condition may comprise an initial condition given at an initial time t₀. Alternatively, the boundary condition may comprise a final condition at a final time t₀. Then, the final condition may be transformed into an initial condition by reverting the time, t → t₀ - t.

According to the method, X is discretized in accordance with a mesh of n_{Q} = 2^{N} points ${\left\{{X}_{i}\right\}}_{i = 1}^{{n}_{Q}}$, wherein ${X}_{i} ∈ {ℝ}^{k - 1}$. I. e., as it is the case for a simulation on a classical computer, the continuous variable X is discretized. For example, when $X ∈ ℝ$, X may be confined in the interval [Xₘᵢₙ, Xₘₐₓ]. Then, a discretization of said interval in n_{Q} = 2^{N} points may be given by Xⱼ = Xₘᵢₙ + j · δ, wherein j = 0 ..., n_{Q}-1 and $δ = \frac{{X}_{max} - {X}_{min}}{{n}_{Q} - 1}$.

The first step of the method comprises preparing a qubit system of a quantum computer comprising N system qubits and a first ancillary qubit in an initial state given by a state vector |Φ₀〉 = |φ₀〉 ⊗ |0_{E}〉. Here, $\left|{φ}_{0}\right〉 = {\sum }_{i = 0}^{{n}_{Q} - 1} {φ}_{i} \left|{x}_{i}\right〉$ is the state vector of an N-qubit state encoding the boundary condition using at most n_{Q} basis state vectors |xᵢ〉 of the N system qubits q₁, ..., q_{N}. For each point Xᵢ there may be an associated basis state vector |xᵢ〉. The basis state vectors |xᵢ〉 may be so-called computational basis state vectors introduced above, i. e. |xᵢ〉 = |a₁ a₂ ... a_{N}〉, wherein aⱼ ∈ {0,1}. I. e., the basis state vector |xᵢ〉 may be a tensor product of the basis state vectors |0〉, |1〉 of single qubits. The state vector |0〉 may correspond to the ground state of the qubit, and the state vector |1〉 may correspond to an excited state of the qubit. The basis state vectors |0〉 and |1〉 may be eigenvectors of the Pauli Z-matrix, but this is not necessarily the case. The state vector |0_{E}〉 of the first ancillary qubit q_{E} is one of two basis state vectors |0_{E}〉, |1_{E}〉 of the first ancillary qubit q_{E}. The state vector |0_{E}〉 may correspond to the ground state of the first ancillary qubit. The state vector |0_{E}〉 is an eigenvector of the Pauli Z-matrix. It is possible to prepare the initial state given by the state vector |φ₀〉, as it is shown e. g. in Document 1, Mikko Mottonen et al., "Transformation of quantum states using uniformly controlled rotations", Quant. Inf. Comp. 5, 467 (2005).

Once the initial state is prepared, the method comprises implementing a Hamiltonian evolution 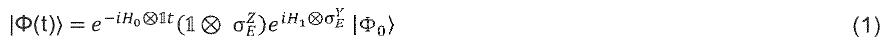 on the quantum computer. Here, H₁ = arccos (*e^{-iAt}*) is a hermitian operator acting on the system qubits q₁ ..., q_{N}. H₁ is interpreted as a second Hamiltonian. ${σ}_{E}^{Z}$ and ${σ}_{E}^{Y}$ are the Pauli Z-matrix and the Pauli Y-matrix acting on the first ancillary qubit q_{E}, respectively. I. e., ${σ}_{E}^{Y} = \left(\begin{matrix}0 & - i \\ i & 0\end{matrix}\right)$ and ${σ}_{E}^{Z} = \left(\begin{matrix}1 & 0 \\ 0 & - 1\end{matrix}\right)$*.* |0_{E}〉 may be represented as $\left(\begin{matrix}1 \\ 0\end{matrix}\right)$, and |1_{E}〉 may be represented as $\left(\begin{matrix}0 \\ 1\end{matrix}\right)$ . H₀ is the optional hermitian part of the operator Q. When Q is anti-hermitian, the term 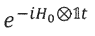 is absent in Eq. (1). 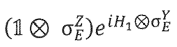 is a unitary operator acting on the state of the system qubits and the first ancillary qubit. 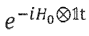 acts only on the system qubits.

Given the unitary operator 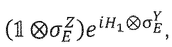 the identity 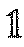 and the Hamiltonian H₁ act on the system qubits and ${σ}_{E}^{Z}$ and ${σ}_{E}^{Y}$ act on the first ancillary qubit q_{E}. As each of the three terms 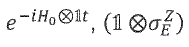 and ${e}^{{iH}_{1} ⊗ {σ}_{E}^{Y}}$ of equation (1) is a unitary operator, the evolution is implementable on a quantum computer.

Starting from an initial state given by the state vector |Φ₀〉 = |φ₀〉 ⊗ |0_{E}〉, the system evolves at time t to the state represented by the vector

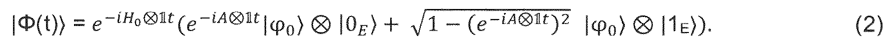

According to the method of the first aspect of the present invention, the state of the first ancillary qubit q_{E} is measured after the Hamiltonian evolution at time T. As it follows from equation (2) above, when the result of the measurement is that the first ancillary qubit state is given by the state vector |0_{E}〉, the measured N-qubit state of the system qubits after the measurement is represented by the state vector *e*^{*-iH*₀}*^{t}e^{-iAt}* |φ₀〉. I. e., the dynamics of the non-hermitian part A of Q, *e^{-iAt},* may be simulated on a quantum computer via an embedding of the evolution in a system of N+1 qubits comprising N system qubits q₁, ..., q_{N} and one first ancillary qubit q_{E}. Then, an appropriate measurement of the N-qubit state of the system qubits at a given time T, e. g. in the basis of the basis state vectors |xᵢ〉 as it is further explained below, on the condition that the first ancillary qubit q_{E} is in the state given by the state vector |0_{E}〉, may allow to derive f(T, Xᵢ).

While a classical algorithm using a discretization of n_{Q} = 2^{N} points is exponentially costly, the quantum computer-implemented method as shown above requires only N + 1 qubits. Reasonable approximations of the solution f of the partial differential equation which are comparable with the discretization usually employed in classical techniques may be achieved for systems comprising about ten qubits.

In the method according to the first aspect of the present invention, the boundary condition of the function f is given by f(t₀, X) = g(X) for some ${t}_{0} ∈ ℝ$, wherein g maps at least a subspace of the k-dimensional real space ${ℝ}^{k}$ to at least a subspace of the space 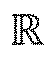 of real numbers, and the method further comprises encoding of the boundary condition in the coefficients φᵢ of the initial state vector |φ₀〉 of the system qubits as ${φ}_{i} = \frac{g \left({X}_{i}\right)}{\sqrt{Λ}}$ , where $∧ = {\sum }_{i = 0}^{{n}_{Q} - 1} {\left|g\left({X}_{i}\right)\right|}^{2}$. I. e., the initial state of the N system qubits is given by $\left|{φ}_{0}\right〉 = \frac{1}{\sqrt{Λ}} {\sum }_{i = 0}^{{n}_{Q} - 1} g \left({X}_{i}\right) \left|{x}_{i}\right〉$. Here, each discretized value of X, Xᵢ, is associated to a basis state vector |xᵢ〉. The basis state vectors may be the computational basis state vectors. The initial state may be prepared as it is shown, e.g. in Document 1.

Alternatively, each discretized value of X, Xᵢ, is associated to two basis state vectors |*xⱼ*〉 and |*x*_{*n_{Q}-*1-*j*}〉*.* Then, the method according to the first aspect of the present invention comprises encoding of the boundary condition in the coefficients φᵢ of the initial state vector as $\left|{φ}_{0}\right〉 = {\sum }_{j = 0}^{\frac{{n}_{Q}}{2} - 1} \frac{g \left({X}_{j}\right)}{\sqrt{Λ}} \left(\left|{x}_{j}\right〉+\left|{x}_{{n}_{Q} - 1 - j}\right〉\right)$. Here, $Λ = 2 {\sum }_{j = 0}^{{n}_{Q} / 2 - 1} {\left|g\left({X}_{j}\right)\right|}^{2}$ is a normalization factor. This encoding of the boundary condition may increase the stability of the implementation of the Hamiltonian evolution, in particular when at least one of the Hamiltonians H₀ and H₁ does not have periodic boundary conditions.

The initial condition is encoded as above either as $\left|{φ}_{0}\right〉 = \frac{1}{\sqrt{Λ}} {\sum }_{j = 0}^{{n}_{Q} - 1} g \left({X}_{j}\right) \left|{x}_{j}\right〉$ or as $\left|{φ}_{0}\right〉 = {\sum }_{j = 0}^{\frac{{n}_{Q}}{2} - 1} \frac{g \left({X}_{j}\right)}{\sqrt{Λ}} \left(\left|{x}_{j}\right〉+\left|{x}_{{n}_{Q} - 1 - j}\right〉\right)$. The measurement of the post-selected N-qubit state of the system qubits comprises measuring in the basis of the basis state vectors |xᵢ〉, i = 0, ..., n_{Q}-1 to obtain the solution f(T, Xᵢ) via the relation $f \left(T, {X}_{i}\right) = \sqrt{p \left(\left.{X}_{i}\right|{0}_{E}\right) Λ}$, wherein p(Xᵢ|0_{E}) is the conditional probability of measuring the state given by the state vector |xᵢ〉 conditioned on the first ancillary qubit being in the state given by the state vector |0_{E}〉 and Λ is the normalization constant of the state vector |*φ*₀〉. For example, to determine p(Xᵢ|0_{E}), one may use the Positive-Operator-Valued-Measure (POVM) given by |xᵢ〉〈xᵢ| and

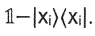

When the basis state vectors |xᵢ〉 are the computational basis state vectors, p(Xᵢ|0_{E}) may be determined by measuring each system qubit in the σ^{Z} basis. I. e., one determines for each system qubit q₁, ..., q_{N} the probability of being in the state given by the state vector |0〉 or the state vector |1〉.

In one embodiment of the method according to the first aspect of the present invention, the quantum computer is a digital quantum computer and the method comprises the implementation of the Hamiltonian evolution on a digital quantum computer using a universal set of one- and two-qubit gates. A digital quantum computer uses quantum logic gates to carry out a computation. I. e., the Hamiltonian evolution is implemented using a quantum circuit. A quantum circuit is a model for quantum computation in which the computation is carried out via a sequence of quantum gates. A quantum gate is an operation on a small number of qubits. It is known that there exist sets of gates which are universal for quantum computation. I. e., any unitary operation may be approximated to arbitrary accuracy by a quantum circuit involving only those gates. The universal set of gates may be a set comprising the Hadamard gate, the phase gate, the π/8 gate and the CNOT-gate, but this set is not unique.

In another embodiment of the method according to the first aspect of the present invention, the first and/or second Hamiltonian(s) H₀ and H₁ may be diagonalizable by a quantum Fourier transform F, i.e. ${H}_{α}^{\left(k\right)} = {FH}_{α} {F}^{†} = {\sum }_{{s}_{1} … {s}_{N} = 0}^{1} {h}_{{s}_{1} … {s}_{N}}^{\left(α\right)} \left|{s}_{1}…{s}_{N}\right〉 \left〈{s}_{1}…{s}_{N}\right|$*,* wherein α = 0,1, ${h}_{{s}_{1} … {s}_{N}}^{\left(α\right)}$ is real, ${\left(-t\right)}^{1 - α} {H}_{α}^{\left(k\right)} = {\sum }_{{j}_{1} … {j}_{N} = 0}^{1} {β}_{{j}_{1} … {j}_{N}}^{\left(α\right)} {σ}_{1}^{{j}_{1}} ⊗ … ⊗ {σ}_{N}^{{j}_{N}}$, wherein 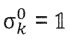 is the identity and ${σ}_{k}^{1} = {σ}_{k}^{Z}$ is the Pauli Z-matrix acting on the qubit *qₖ,* for all k = 1, ...N, and ${β}_{{j}_{1} … {j}_{N}}^{\left(α\right)} = \frac{{\left(-t\right)}^{1 - α}}{{n}_{Q}} {\sum }_{{s}_{1} … {s}_{N} = 0}^{1} {h}_{{s}_{1} … {s}_{N}}^{\left(α\right)} ⋅ {\left(-1\right)}^{{\sum }_{l = 1}^{N} {s}_{l} {j}_{l}}$, and wherein the implementation of the Hamiltonian evolution comprises an implementation of the quantum Fourier transform. Then, the implementation of the Hamiltonian evolution may be decomposed into the following steps:
First, the quantum Fourier transform is applied to the N system qubits q,,...,q_{N} prepared in the initial state given by the state vector |φ₀〉 defined above. It is known in the art that the quantum Fourier transform may be implemented efficiently within a quantum circuit model. The Quantum Fourier transform is implementable by using only Hadamard gates, controlled phase gates and swap gates.

In the next step, the unitary evolution ${{e}^{- {ith}_{{s}_{1} … {s}_{N}}^{\left(0\right)}}}^{\left|{s}_{1}…{s}_{N}\right〉 \left〈{s}_{1}…{s}_{N}\right|}$*,* resp. ${e}^{{ih}_{{s}_{1} … {s}_{N}}^{\left(1\right)} \left|{s}_{1}…{s}_{N}\right〉 \left〈{s}_{1}…{s}_{N}\right| ⊗ {σ}_{E}^{Y}}$ is implemented for the n_{Q} terms of the Fourier-transformed first and/or second Hamiltonian(s) H_{α}^{(k)}. Since the terms ${h}_{{s}_{1} … {s}_{N}}^{\left(α\right)} \left|{s}_{1}…{s}_{N}\right〉 \left〈{s}_{1}…{s}_{N}\right|$ of the Hamiltonians commute, they may be implemented independently of each other. I. e., for each of the n_{Q} terms of the Hamiltonians H_{α}^{(k)}, there may be a quantum circuit implementing the corresponding unitary evolution.

In the last step, the inverse of the quantum Fourier transform is applied to the system qubits.

This implementation of the Hamiltonian evolution is a particularly natural implementation when the first and/or second Hamiltonian H₀ and H₁ are diagonalizable by a quantum Fourier transform.

When the first Hamiltonian H₀ is diagonalizable by a quantum Fourier transform, the method may further comprise in step ii) preparing a qubit system comprising the N system qubits (q₁, ..., q_{N}) , the first ancillary qubit (q_{E}) and a second ancillary qubit (q_{G}) in the initial state given by the state vector |Φ₀〉 = |φ₀〉 ⊗ |0_{E}〉⊗ |0_{G}〉, wherein |0_{G}〉 is one of two basis state vectors of the second ancillary qubit (q_{G}) and an eigenvector of the Pauli Z-matrix, and the implementation of the Hamiltonian evolution according to the first Hamiltonian H₀ in step iii) may comprise the following steps:
1) application of the quantum Fourier transform to the N system qubits (q₁, ..., q_{N}), then
2) for each tuple (*j*₁ *... j_{N}*), wherein *jₖ* = 0 or 1 for k = 1, ..., N:
   a) for each k = 1, ..., N for which jₖ = 1 application of a CNOT-gate between the second ancillary qubit (q_{G}) as the target qubit and the system qubit *qₖ* as the control qubit, then
   b) application of a rotation ${R}_{Z} \left({β}_{{j}_{1} … {j}_{N}}^{\left(0\right)}\right) = {e}^{{iβ}_{{j}_{1} … {j}_{N}}^{\left(0\right)} {σ}_{G}^{Z}}$ to the second ancillary qubit (q_{G}), wherein ${β}_{{j}_{1} … {j}_{N}}^{\left(0\right)} = \frac{\left(-t\right)}{{n}_{Q}} {\sum }_{{s}_{1} … {s}_{N = 0}}^{1} {h}_{{s}_{1} … {s}_{N}}^{\left(0\right)} ⋅ {\left(-1\right)}^{{\sum }_{l = 1}^{N} {s}_{l} {j}_{l}}$, then
   c) for each k = 1, ..., N for which jₖ = 1 application of a CNOT-gate between the second ancillary qubit (q_{G}) as the target qubit and the system qubit *qₖ* as the control qubit, then
3) application of the inverse of the quantum Fourier transform to the N system qubits (q₁, ..., q_{N}).

When, additionally or alternatively, the second Hamiltonian H₁ is diagonalizable by a quantum Fourier transform, the method may further comprise in step ii) preparing a qubit system comprising the N system qubits (q₁, ..., q_{N}), the first ancillary qubit (q_{E}) and a second ancillary qubit (q_{G}) in the initial state given by the state vector |Φ₀〉 = |φ₀〉 ⊗ |0_{E}〉⊗ |0_{G}〉, wherein |0_{G}〉 is one of two basis state vectors of the second ancillary qubit (q_{G}) and an eigenvector of the Pauli Z-matrix, and wherein the implementation of the Hamiltonian evolution according to the second Hamiltonian H₁ in step iii) may comprise the following steps:
1) application of the quantum Fourier transform to the N system qubits (q₁, ..., q_{N}), then
2) application of the complex conjugate of the phase gate (S*) followed by the Hadamard gate (H) to the first ancillary qubit (q_{E}), then
3) for each tuple (*j*₁ *... j_{N}*)*,* wherein *jₖ* = 0 or 1 for k = 1, ..., N:
   a) application of a CNOT-gate between the second ancillary qubit (q_{G}) as the target qubit and the first ancillary qubit (q_{E}) as the control qubit, and for each k = 1, ..., N for which jₖ = 1 application of a CNOT-gate between the second ancillary qubit (q_{G}) as the target qubit and the system qubit *qₖ* as the control qubit, then
   b) application of a rotation ${R}_{Z} \left({β}_{{j}_{1} … {j}_{N}}^{\left(1\right)}\right) = {e}^{{jβ}_{{j}_{1} … {j}_{N}}^{\left(1\right)} {σ}_{G}^{Z}}$ to the second ancillary qubit (q_{G}), wherein ${β}_{{j}_{1} … {j}_{N}}^{\left(1\right)} = \frac{1}{{n}_{Q}} {\sum }_{{s}_{1} … {s}_{N} = 0}^{1} {h}_{{s}_{1} … {s}_{N}}^{\left(1\right)} ⋅ {\left(-1\right)}^{{\sum }_{l = 1}^{N} {s}_{l} {j}_{l}}$*,* then
   c) application of a CNOT-gate between the second ancillary qubit (q_{G}) as the target qubit and the first ancillary qubit (q_{E}) as the control qubit, and for each k = 1, ..., N for which jₖ = 1 application of a CNOT-gate between the second ancillary qubit (q_{G}) as the target qubit and the system qubit *qₖ* as the control qubit, then
4) application of the Hadamard gate H followed by the phase gate S to the first ancillary qubit (q_{E}),
5) application of the inverse of the quantum Fourier transform to the N system qubits (q₁, ..., q_{N}).

When the first and/or second Hamiltonians H₀ and H₁ are diagonalizable by a quantum Fourier transform as explained above, the Fourier-transformed Hamiltonian(s) ${H}_{α}^{\left(k\right)} = {FH}_{α} {F}^{†} = {\sum }_{{s}_{1} … {s}_{N} = 0}^{1} {h}_{{s}_{1} … {s}_{N}}^{\left(α\right)} \left|{s}_{1}…{s}_{N}\right〉 \left〈{s}_{1}…{s}_{N}\right|$*,* α = 0,1, may be brought into the following form using the Cartan basis: $\begin{matrix}{\left(-t\right)}^{1 - α} {H}_{α}^{\left(k\right)} = {\sum }_{{j}_{1} … {j}_{N} = 0}^{1} {β}_{{j}_{1} … {j}_{N}}^{\left(α\right)} {σ}_{1}^{{j}_{1}} ⊗ … ⊗ {σ}_{N}^{{j}_{N}} \\ {β}_{{j}_{1} … {j}_{N}}^{\left(α\right)} = \frac{{\left(-t\right)}^{1 - α}}{{n}_{Q}} {\sum }_{{s}_{1} … {s}_{N} = 0}^{1} {h}_{{s}_{1} … {s}_{N}}^{\left(α\right)} ⋅ {\left(-1\right)}^{{\sum }_{l = 1}^{N} {s}_{l} {j}_{l}} ,\end{matrix}$ (3) where 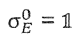 is the identity and ${σ}_{k}^{1} = {σ}^{Z}$ is the Pauli Z-matrix, for all k = 1, ...N.

H₀^{(k)} and/or H₁^{(k)} are both a sum of commuting operators, and furthermore ${e}^{{iβ}_{{j}_{1} … {j}_{N}}^{\left(1\right)} {σ}_{1}^{{j}_{1}} … ⊗ {σ}_{N}^{{j}_{N}} ⊗ {σ}_{E}^{Y}} = SH {e}^{i {β}_{{j}_{1} … {j}_{N}}^{\left(1\right)} {σ}_{1}^{{j}_{1}} … ⊗ {σ}_{N}^{j} ⊗ {σ}_{E}^{Z}} HS * ,$ (4) wherein H is the Hadamard gate $H = \frac{1}{\sqrt{2}} \left(\begin{matrix}1 & 1 \\ 1 & - 1\end{matrix}\right)$ and S is the phase gate, $S = \left(\begin{matrix}1 & 0 \\ 0 & i\end{matrix}\right)$ and S* is the complex conjugate of the phase gate. Thus, the exponential of ${\left(-t\right)}^{1 - α} {iH}_{α}^{\left(k\right)} ⊗ {σ}_{E}^{α}$*,* α = 0 or 1, is decomposable into a product of unitary operators of the form ${U}_{{j}_{1} … {j}_{N}}^{\left(α\right)} = {e}^{{iβ}_{{j}_{1} … {j}_{N}}^{\left(α\right)} {σ}_{1}^{{j}_{1}} … ⊗ {σ}_{N}^{{j}_{N}} ⊗ {σ}_{E}^{α}} ,$ (5) where 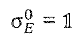 is the identity and ${σ}_{E}^{1} = {σ}^{Z}$ is the Pauli Z-matrix acting on the first ancillary qubit q_{E}. I. e. the Hamiltonian evolution according to 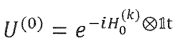 and ${U}^{\left(1\right)} = {e}^{{iH}_{1}^{\left(k\right)} ⊗ {σ}_{E}^{Y}}$ may be rewritten as ${U}^{\left(α\right)} = {\prod }_{{j}_{1} … {j}_{N = 0}}^{1} {U}_{{j}_{1} … {j}_{N}}^{\left(α\right)} .$

These unitary operators ${U}_{{j}_{1} … {j}_{N}}^{\left(α\right)}$ may be implemented on a qubit system comprising the system qubits q₁, ..., q_{N}, the first ancillary qubit q_{E} and a second ancillary qubit q_{G}. Thus, the Hamiltonian evolution according to the first and/or second Hamiltonian(s) may be carried out in the following way:
First, a qubit system comprising N system qubits, a first ancillary qubit q_{E} and a second ancillary qubit q_{G} is prepared in the initial state |φ₀〉⊗|0_{E}〉⊗|0_{G}〉. Here, |φ₀〉 and |0_{E}〉 were defined above and |0_{G}〉 is one of two basis state vectors of the second ancillary qubit q_{G} and an eigenvector of the Pauli Z-matrix. |0_{G}〉 may be represented as $\left(\begin{matrix}1 \\ 0\end{matrix}\right)$. When only the first Hamiltonian is diagonalizable by a Fourier transform, the second ancillary qubit is not necessary and may be omitted.

Next, the evolution 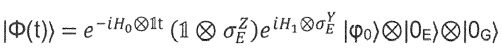 will be implemented. As H₀ and H₁ commute, this evolution is equal to the evolution

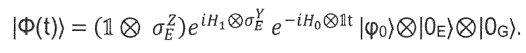

We start with implementing the evolution according to the first Hamiltonian. Assuming that the first Hamiltonian is diagonalizable by a quantum Fourier transform, the total evolution to be implemented may be represented in the following form:

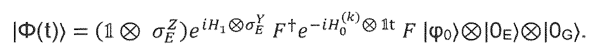

Thus, as the first operation, a quantum Fourier transform is applied to the N system qubits, as explained above.

As explained above, 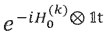 may be written as a product of unitaries ${\prod }_{{j}_{1} … {j}_{N = 0}}^{1} {U}_{{j}_{1} … {j}_{N}}^{\left(0\right)}$*.* Then, for each tuple (*j*₁ *... j_{N})* corresponding to one of the unitaries ${U}_{{j}_{1} … {j}_{N}}^{\left(0\right)}$*,* wherein *jₖ* = 0 or 1 for k = 1, ..., N, the following sequence of gates is applied in this order:
First, for each k = 1, ..., N for which jₖ = 1 a CNOT-gate is applied between the second ancillary qubit q_{G} as the target qubit and the system qubit qₖ as the control qubit. For example, when there are eight system qubits q₁,..., q₈, there are 2⁸ tuples (*j*₁ ...*j*₈) respectively unitaries, wherein *j*₁*, ..*., *j*₈ = 0 or 1. One of these tuples is e. g. of the form (0, 1, 1, 0, 1, 0, 0, 0). I.e., j₂, j₃ and j₅ are equal to 1. Then, three CNOT-gates are applied. Namely, for k = 2, 3 and 5 one CNOT-gate is applied between the second ancillary qubit q_{G} as the target qubit and the respective system qubit q₂, q₃ and q₅ as the control qubit.

In the next step, a rotation ${R}_{Z} \left({β}_{{j}_{1} … {j}_{N}}^{\left(0\right)}\right) = {e}^{{jβ}_{{j}_{1} … {j}_{N}}^{\left(0\right)} {σ}_{G}^{Z}}$ is applied to the second ancillary qubit q_{G}, wherein ${β}_{{j}_{1} … {j}_{N}}^{\left(0\right)} = \frac{\left(-t\right)}{{n}_{Q}} {\sum }_{{s}_{1} … {s}_{N = 0}}^{1} {h}_{{s}_{1} … {s}_{N}}^{\left(0\right)} ⋅ {\left(-1\right)}^{{\sum }_{l = 1}^{N} {s}_{l} {j}_{l}}$ and ${σ}_{G}^{Z}$ is the Pauli Z-matrix acting on the second ancillary qubit. Thus, when the second ancillary qubit is in the state given by the state vector |0_{G}〉, this results in a phase ${e}^{{iβ}_{{j}_{1} … {j}_{N}}^{\left(0\right)}}$. When the second ancillary qubit is in the state given by the state vector |1_{G}〉, this results in a phase ${e}^{- {iβ}_{{j}_{1} … {j}_{N}}^{\left(0\right)}}$. In the example mentioned before ${β}_{01101000}^{\left(0\right)} = \frac{1}{8} {\sum }_{{s}_{1} … {s}_{8} = 0}^{1} {h}_{{s}_{1} … {s}_{8}}^{\left(0\right)} ⋅ {\left(-1\right)}^{{s}_{2} + {s}_{3} + {s}_{5}}$.

Next, for each k = 1, ..., N for which jₖ = 1 a CNOT-gate is applied between the second ancillary qubit q_{G} as the target qubit and the system qubit *qₖ* as the control qubit. In this way, the state of the second ancillary qubit is transformed back to the state given by the state vector |0_{G}〉.

Finally, the inverse of the quantum Fourier transform is applied to the N system qubits. When the second Hamiltonian is also diagonalizable by a quantum Fourier transform, this step may be omitted.

Next, the evolution according to the second Hamiltonian, i. e. 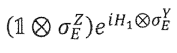 is applied. When the second Hamiltonian is not diagonizable by a quantum Fourier transform, the operator 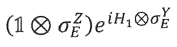 is applied to the N system qubits and the first ancillary qubit. When the second Hamiltonian is diagonalizable by a quantum Fourier transform, a quantum Fourier transform is applied to the N system qubits, as explained above. It is not necessary to apply this quantum Fourier transform when the first Hamiltonian is diagonalizable by a quantum Fourier transform and the inverse quantum Fourier transform mentioned above was omitted, as 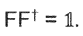 I. e., when both the first and the second Hamiltonian are diagonalizable by a quantum Fourier transform, the total evolution to be implemented is of the following form:

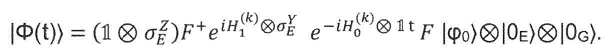

As the evolution according to 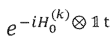 *F* was implemented before, the evolution according to 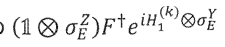 will now be implemented in the following way:
First, the complex conjugate of the phase gate, S*, is applied to the first ancillary qubit q_{E}. Then, the Hadamard gate H is applied to the first ancillary qubit q_{E} (see Equation (4)).

Next, for each tuple (*j*₁ *... j_{N})* corresponding to one of the unitaries ${U}_{{j}_{1} … {j}_{N}}^{\left(1\right)}$, wherein *jₖ* = 0 or 1 for k = 1, ..., N, the following gate sequence is applied in this order:
A CNOT-gate is applied between the second ancillary qubit q_{G} as the target qubit and the first ancillary qubit q_{E} as the control qubit. Furthermore, for each k = 1, ..., N for which jₖ = 1 a CNOT-gate is applied between the second ancillary qubit q_{G} as the target qubit and each system qubit *qₖ* for which *jₖ =* 1 as the control qubit. For the example of the tuple of the form (0, 1, 1, 0, 1, 0, 0, 0), four CNOT-gates are applied. Namely, one CNOT-gate is applied between the second ancillary qubit q_{G} as the target qubit and the first ancillary qubit q_{E}. Furthermore, for k = 2, 3 and 5 a CNOT-gate is applied between the second ancillary qubit q_{G} as the target qubit and the respective system qubit q₂, q₃ and q₅ as the control qubit.

In the next step, a rotation ${R}_{Z} \left({β}_{{j}_{1} … {j}_{N}}^{\left(1\right)}\right) = {e}^{{jβ}_{{j}_{1} … {j}_{N}}^{\left(1\right)} {σ}_{G}^{Z}}$ is applied to the second ancillary qubit, wherein ${β}_{{j}_{1} … {j}_{N}}^{\left(1\right)} = \frac{1}{{n}_{Q}} {\sum }_{{s}_{1} … {s}_{N} = 0}^{1} {h}_{{s}_{1} … {s}_{N}}^{\left(1\right)} ⋅ {\left(-1\right)}^{{\sum }_{l = 1}^{N} {s}_{l} {j}_{l}}$.

Next, a CNOT-gate is applied between the second ancillary qubit q_{G} as the target qubit and the first ancillary qubit q_{E} as the control qubit. Furthermore, for each k = 1, ..., N for which jₖ = 1 a CNOT-gate is applied between the second ancillary qubit q_{G} as the target qubit and the system qubit *qₖ* as the control qubit. In this way, the state of the second ancillary qubit q_{G} is transformed back to the state given by the state vector |0_{G}〉.

Thereafter, the Hadamard gate H is applied to the first ancillary qubit q_{E}. Thereafter, the phase gate S is applied to the first ancillary qubit q_{E}. Finally, the inverse of the quantum Fourier transform is applied to the N system qubits.

To complete the evolution, the operator 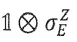 is applied to the N system qubits and the first ancillary qubit.

Thus, the Hamiltonian evolution of the first and/or second Hamiltonian(s) is decomposed into a set of one- and two-qubit gates comprising the Hadamard gate H, the phase gates, the CNOT-gate and a rotation R_{Z}(β). These gates are implementable with state of the art quantum computing architectures.

For one possible class of partial differential equations which is solvable by the above-mentioned method, the non-hermitian operator Q is a polynomial of a momentum operation. I. e., Q is the sum of terms of the form *c*· *p̂^{γ},* wherein *p̂* is the momentum operator, the coefficient c is complex and γ is an integer or a rational number.

In this case, H₀ and H₁ corresponding to the operator Q are both diagonalizable by a quantum Fourier transform. The implementation of H₀ and H₁ may be realized by embedding the evolution into a system comprising a second ancillary qubit q_{G}, and applying the sequence of CNOT-gates and rotations to the second ancillary qubit q_{G} explained above. An example of such a partial differential equation will be given below.

In another embodiment of the method according to the first aspect of the present invention, the partial differential equation is the Black-Scholes equation $\frac{\partial C}{\partial t} + rS \frac{\partial C}{\partial S} + \frac{1}{2} {σ}^{2} {S}^{2} \frac{{\partial }^{2} C}{\partial {S}^{2}} = rC ,$ wherein S ≥ 0 is the value of the underlying stock, r is the constant risk-free interest rate, σ is the constant volatility of the stock, and the boundary condition is given by $C \left(S, T\right) = max \left\{K-S, 0\right\} for some K \geq 0 at the maturity time T .$

In finance, European style options are financial derivate contracts written on an underlying asset, which give the holder the right to buy or sell such asset on a specified future date at a predetermined strike price. One of the fundamental tasks of quantitative finance is calculating the fair price of such option contract before the expiration time. This task is far from being easy due to the randomness associated to the time evolution of both the underlying stock and the interest rates, whose dynamics is usually modelled through stochastic processes. One of the first successful approaches to this problem was achieved by F. Black and M. Scholes by proposing the Black-Scholes model in which a lognormal distribution of the underlying stock price is assumed. Although this model is integrable, numerical methods are still being proposed since this model serves as the ground floor for other more sophisticated models without analytical solutions where numerical errors can be analyzed.

Under the assumption of a market scenario with a constant interest rate and a constant volatility, and providing certain ideal market conditions, the model is based on the possibility of building up a perfect dynamic (short option) hatching portfolio strategy, known as delta hedging, which consists in holding, at each time, a number of shares equal to the derivative of the option price with respect to the stock price. Therefore, the only risky, i. e. random factor associated with the portfolio dynamics is eliminated, and the value of the portfolio agrees with the option value at any time. The terminal condition C(T, S) is given by the pay-off of the option contract defined at the maturity time T for any plausible value of the underlying stock.

By introducing a change of variables S = e^{X}, -∞<X<∞, and by introducing the momentum operator as $\hat{p} = - i \frac{\partial }{\partial X}$*,* the Black-Scholes equation may be rewritten as $\frac{\partial C}{\partial t} = - {iQ}_{BS} C ,$ wherein Q_{BS} = H₀ + A, with hermitian part ${H}_{0} = - \left(\frac{{σ}^{2}}{2}-r\right) \hat{p}$, and anti-hermitian part 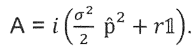 It is immediately clear that H₀ and A commute, i. e. [H₀, A] = 0. Thus, the Black-Scholes equation is solvable by the quantum computer-implemented method according to the first aspect of the present invention. Here, the terminal condition C(S, T) = max {K-S, 0} may be mapped to an initial condition via the mapping t ↦ T-t.

In the case of the Black-Scholes equation, one possibility of encoding the boundary condition comprises encoding the boundary condition in the state represented by the state vector $\left|{φ}_{0}\right〉 = {\sum }_{j = 0}^{{N}_{max}} \frac{K - {e}^{- \frac{{X}_{max}}{2} + j ⋅ {δ}_{x}}}{\sqrt{Λ}} \left(\left|{x}_{j}\right〉+\left|{x}_{{n}_{Q} - 1 - j}\right〉\right)$ where ${N}_{max} = \left[\left({n}_{Q}-1\right)\left(\frac{log \left(K\right)}{2 {X}_{max}}+\frac{1}{4}\right)\right] , Λ = 2 {\sum }_{j = 0}^{{N}_{max}} {\left(K-{e}^{- \frac{{X}_{max}}{2} + j ⋅ {δ}_{x}}\right)}^{2}$ is a normalization factor and ${δ}_{x} = \frac{2 {X}_{max}}{{n}_{Q} - 1}$, and Xₘₐₓ = 2·log(3K).

This encoding of the boundary condition via a duplication of the initial condition allows for a particularly stable implementation of the method on a quantum computer.

In another embodiment of the method according to the first aspect of the present invention, the quantum computer is a superconducting quantum computer.

According to a second aspect of the present invention, there is provided an apparatus according to claim 10 for solving a partial differential equation for a function f which maps at least a subspace of a k-dimensional real space ${ℝ}^{k}$ into at least a subspace of an m-dimensional real space ${ℝ}^{m}$, $f : {ℝ}^{k} \to {ℝ}^{m}$, f: (t, X) ↦ f(t, X), wherein $t ∈ ℝ , X ∈ {ℝ}^{k - 1}$, wherein the partial differential equation is representable in the form $\frac{\partial f}{\partial t} = - iQf$ with a given boundary condition f(t₀, X) = g(X) for some ${t}_{0} ∈ ℝ$, wherein g maps at least a subspace of the k-dimensional real space ${ℝ}^{k}$ to at least a subspace of the space 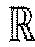 of real numbers, wherein Q is a linear, non-hermitian operator representable as a sum of an anti-hermitian part A and an optional hermitian part H₀, such that the optional hermitian part H₀ and the anti-hermitian part A commute, wherein X is discretized in accordance with a mesh of 2^{N} points, ${\left\{{X}_{i}\right\}}_{i = 1}^{{n}_{Q}}$, wherein ${X}_{i} ∈ {ℝ}^{k - 1}$, the apparatus comprising:
a quantum computer comprising:
a qubit system comprising N system qubits (q₁ ,..., q_{N}) and a first ancillary qubit (q_{E});
quantum state preparation means for preparing the qubit system in an initial state given by a state vector |Φ₀〉 = |φ₀〉 ⊗ |0_{E}〉, wherein $\left|{φ}_{0}\right〉 = {\sum }_{i = 0}^{{n}_{Q} - 1} {φ}_{i} \left|{x}_{i}\right〉$ is a state vector of the N system qubits (q₁ ,..., q_{N}) encoding the boundary condition using at most n_{Q} basis state vectors |xᵢ〉 of the N system qubits (q₁, ..., q_{N}) in the coefficients φᵢ of the initial state vector |φ₀〉 of the system qubits (q₁, ..., q_{N}) as ${φ}_{i} = \frac{g \left({X}_{i}\right)}{\sqrt{Λ}}$, where $∧ = {\sum }_{i = 0}^{{n}_{Q} - 1} {\left|g\left({X}_{i}\right)\right|}^{2}$ or as $\left|{φ}_{0}\right〉 = {\sum }_{j = 0}^{\frac{{n}_{Q}}{2} - 1} \frac{g \left({X}_{j}\right)}{\sqrt{Λ}} \left(\left|{x}_{j}\right〉+\left|{x}_{{n}_{Q} - 1 - j}\right〉\right)$ where $Λ = 2 {\sum }_{j = 0}^{{n}_{Q} / 2 - 1} {\left|g\left({X}_{j}\right)\right|}^{2}$, and |0_{E}〉 is one of two basis state vectors of the first ancillary qubit (q_{E}) and an eigenvector of the Pauli Z-matrix;
implementation means for implementing a Hamiltonian evolution 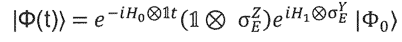 with H₀ being the hermitian part of the operator Q as a first Hamiltonian and H₁ = arccos(e^{-iAt}) as a second Hamiltonian, and ${σ}_{E}^{Z}$ and ${σ}_{E}^{Y}$ are the Pauli Z-matrix and the Pauli Y-matrix, respectively, acting on the first ancillary qubit (q_{E}), wherein the term 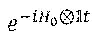 is absent in the Hamiltonian evolution when Q is anti-hermitian; projection means for projecting the state of the first ancillary qubit (q_{E}) in the state given by the state vector |0_{E}〉, and measurement means for measuring the state of the N system qubits (q₁ ,..., q_{N}) in the basis of the basis state vectors |*xᵢ*〉*, i =* 0, *...*, n_{Q} - 1;
post-selection means for post-selecting the N-qubit state of the N system qubits (q₁ ,..., q_{N}) after the measurement of the first ancillary qubit (q_{E}) on the condition that the first ancillary qubit (q_{E}) is in the state given by the state vector |0_{E}〉,
the apparatus further comprising classical data-processing means for obtaining, at a given time T, the solution f(T, Xᵢ) from a measurement of the measured N-qubit state of the N system qubits (q₁ ,..., q_{N}) via the relation $f \left(T, {X}_{i}\right) = \sqrt{p \left(\left.{X}_{i}\right|{0}_{E}\right) Λ}$*,* wherein *p*(*Xᵢ*|0*_{E}*) is the conditional probability of measuring the state given by the state vector |xᵢ〉 conditioned on the first ancillary qubit (q_{E}) being in the state given by the state vector |0_{E}〉 and Λ is the normalization constant of the state vector |φ₀〉.

The apparatus according to the second aspect of the present invention is adapted to carry out the method according to the first aspect of the present invention. Everything that was said above in relation to the method according to the first aspect of the present invention also applies to the apparatus according to the second aspect of the present invention.

In one embodiment of the apparatus according to the second aspect of the present invention, the qubit system further comprises a second ancillary qubit q_{G} for embedding the Hamiltonian evolution according to the first and/or second Hamiltonian in a qubit system comprising the additional second ancillary qubit (q_{G}). In this way, the unitary operations given in Eq. (5) may be implemented in an efficient way by using the gate sequence described in relation to Eq. (5).

The qubits of the qubit system may be superconducting qubits. The superconducting qubits may be phase qubits, charge qubits or flux qubits or a hybridization thereof. In the phase qubit, the states |0> and |1> may be realized by different quantum charge oscillation amplitudes across a Josephson junction. In the charge qubit, the states |0> and |1> may be realized by states having different numbers of Cooper pairs on a superconducting island. In the flux qubit, the states |0> and >1> may be realized by states having different numbers of magnetic flux quanta trapped in a superconducting ring. However, the invention is not limited to superconducting qubits, and other possible qubits systems may be used, e.g. trapped ions, cold atoms, electrons in quantum dots, nuclear spins, photons, etc.

The quantum state preparation means and/or the implementation means may comprise means for generating microwave pulses, an intermediate coupling circuit, e.g. a capacitor or a DC-SQUID or an intermediate quantum bus, e.g. a microwave cavity.

The projection means and/or the measurement means may comprise a voltmeter, a magnetometer or a microwave resonator, among others, depending on the type of qubit and the type of coupling between them.

The apparatus according to the second aspect of the present invention comprises classical data-processing means to obtain, at a given time T, the solution f(T, X) from the measurement result obtained by measuring the post-selected N-qubit state of the system qubits. The classical means for data processing may comprise a personal computer.

In the following description, the invention will be specified in greater detail by way of examples, with reference to the drawings. In the drawings
- Fig. 1: is a schematic view of an apparatus according to the present invention,
- Fig. 2: is a schematic representation of a quantum circuit for solving a partial differential equation for which the first and second Hamiltonians H₀ and H₁ are diagonalizable by a quantum Fourier transform,
- Fig. 3: is a scheme of a quantum circuit implementation of the quantum Fourier transform,
- Fig. 4: is a scheme of a quantum circuit implementation of a term of one of the terms of the unitary evolution according to the first or second Hamiltonian, H₀ or H₁, after the quantum Fourier transform has been applied,
- Fig. 5A: is a scheme of an optimized quantum circuit implementation of the Fourier-transformed first Hamiltonian H₀^{(k)} of the Black-Scholes equation for eight qubits and the 32 largest body interactions,
- Fig. 5B: is a scheme for an optimized quantum circuit implementation of the Fourier-transformed second Hamiltonian H₁^{(k)} of the Black-Scholes equation for eight qubits and the 32 largest body interactions.

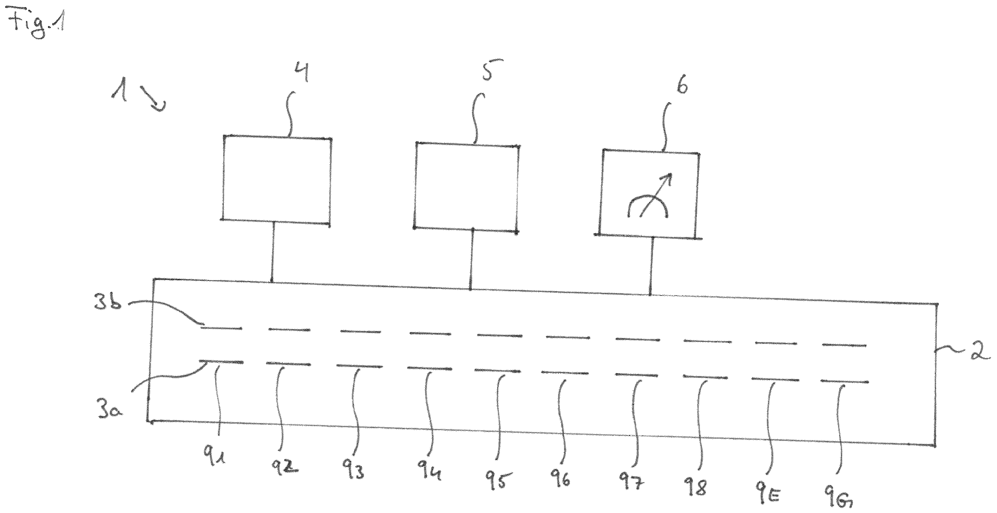

Fig. 1 is a schematic view of an apparatus 1 according to the present invention. The apparatus 1 comprises a system 2 of N = 8 system qubits q₁, ..., q₈, a first ancillary qubit q_{E} and a second ancillary qubit q_{G}. Each qubit is depicted as a two-level system. Each two-level system may comprise a ground state 3a and an excited state 3b. The basis state vectors of each of the two-level systems may be given by |0> and |1>, wherein |0> is the state vector corresponding to the ground state and |1> is the state vector corresponding to the excited state. The qubits may be superconducting qubits. The qubits may be phase qubits, charge qubits or flux qubits or a hybridization thereof.

The system 1 may further comprise quantum state preparation means 4 for preparing a desired initial state of the system of N+2 qubits.

Furthermore, the system 1 comprises implementation means 5 for implementing a Hamiltonian evolution on the system of the 10 qubits. The quantum state preparation means for preparing the desired initial state and/or the implementation means for implementing the Hamiltonian evolution may comprise means for generating microwave pulses, an intermediate coupling circuit, e. g. a capacitor or a DC-SQUID or an intermediate quantum bus, e. g. a microwave cavity.

In addition, the system comprises projection means 6 for projecting the state of the first ancillary qubit in the state |0_{E}〉, and measurement means 6 for measuring the state of the system qubits after the ancillary qubit is measured.

The system may further comprise post-selection means for post-selecting the N-qubit state after the measurement of the first ancillary qubit (not shown). In addition, the system may comprise data-processing means for obtaining, at a given time T, the solution f(T, Xᵢ) from the measurement of the measured N-qubit state of the system qubits.

In the following detailed description, the method for solving a partial differential equation according to the present invention will be described for a special subset of partial differential equations. To this end, let f be a function which maps at least a subspace of a k-dimensional real space ${ℝ}^{k}$ into at least a subspace of an m-dimensional real space ${ℝ}^{m}$, $f : {ℝ}^{k} \to {ℝ}^{m}$, f: (t, X) ↦ f(t, X), wherein $t ∈ ℝ , X ∈ {ℝ}^{k - 1}$, and wherein the partial differential equation is representable in the form $\frac{\partial f}{\partial t} = - iQf$. Here, Q is a linear, non-hermitian operator and representable as a sum of an anti-hermitian part A and an optional hermitian part H₀, such that the hermitian part H₀ and the anti-hermitian part A commute, i. e. [H₀, A] = 0. I. e., Q may either be anti-hermitian, Q = A, or Q may be a sum of the hermitian part H₀ and the anti-hermitian part A, Q = H₀ + A. There is a given boundary condition f(t₀, X) for some ${t}_{0} ∈ ℝ$. As will be explained in further detail below, the boundary condition is encoded in a quantum mechanical wave function represented by the state vector |φ₀〉. Then, if one adds a first ancillary qubit, the first ancillary qubit being in one of its two basis states |0_{E}〉 which is an eigenstate of the Pauli Z-matrix, the method according to the present invention comprises implementing a Hamiltonian evolution

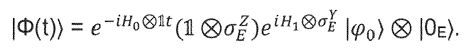

Here, H₁ = arccos (e^{-iAt}) is hermitian and may thus be interpreted as a Hamiltonian of a quantum system. The hermitian part of Q, H₀, is interpreted as a first Hamiltonian and the hermitian operator H₁ is interpreted as a second Hamiltonian. When Q is anti-hermitian, the term 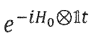 is absent in the Hamiltonian evolution. In the following detailed description, we will consider the special case where H₀ and H₁ are both diagonalizable by a quantum Fourier transform.

One example of a partial differential equation which is representable in the form given above is the Black-Scholes equation given by $\frac{\partial C}{\partial t} + rS \frac{\partial C}{\partial S} + \frac{1}{2} {σ}^{2} {S}^{2} \frac{{\partial }^{2} C}{\partial {S}^{2}} = rC ,$ with terminal condition C(T, S) = max{K-S, 0} at the maturity time T. C(T, S) is the pay-off of the option contract at the maturity time for any plausible value of the underlying stock S ≥ 0. Here, r represents the constant risk-free interest rate while σ is the constant volatility of the stock.

The change of variables S = e^{X}, -∞<X<∞ and the introduction of the momentum operator ${p}^{∧} = - i \frac{\partial }{\partial X}$ allows to rewrite the Black-Scholes equation in the following form: $\frac{\partial C}{\partial t} = - iQC ,$ wherein Q = H₀ + A with the hermitian part ${H}_{0} = - \left(\frac{{σ}^{2}}{2}-r\right) \hat{p}$ and the anti-hermitian part 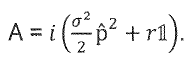 As H₀ and A both depend on the momentum operator and the identity operator only, it is immediately obvious that the first Hamiltonian H₀ and the second Hamiltonian H₁ = arccos(e^{-iAt}) are diagonalizable by a quantum Fourier transform.

To obtain a quantum circuit for a digital quantum computer, the variable X ∈ [-Xₘₐₓ, Xₘₐₓ] is discretized in a mesh of n_{Q} = 2^{N} points, i. e. Xⱼ = -Xₘₐₓ + δ · j, where $δ = \frac{2 {X}_{max}}{{n}_{Q} - 1}$ for j = 0, ..., n_{Q}-1. Then, each Xⱼ may be associated with a basis state vector of a system of N system qubits, lxⱼ〉 = |a₁ ... a_{N}〉, where xⱼ = a₁ · 2⁰ + a₁ · 2¹ + ... + *a_{N}*2^{*N*-1}*.* According to the Nyquist-Shannon sampling theorem, the state vector |φ₀〉 of an N-qubit system may be approximated up to exponentially small corrections by $\left|{φ}_{0}\right〉 = {\sum }_{i = 0}^{{n}_{Q - 1}} {φ}_{i} \left|{x}_{i}\right〉$.

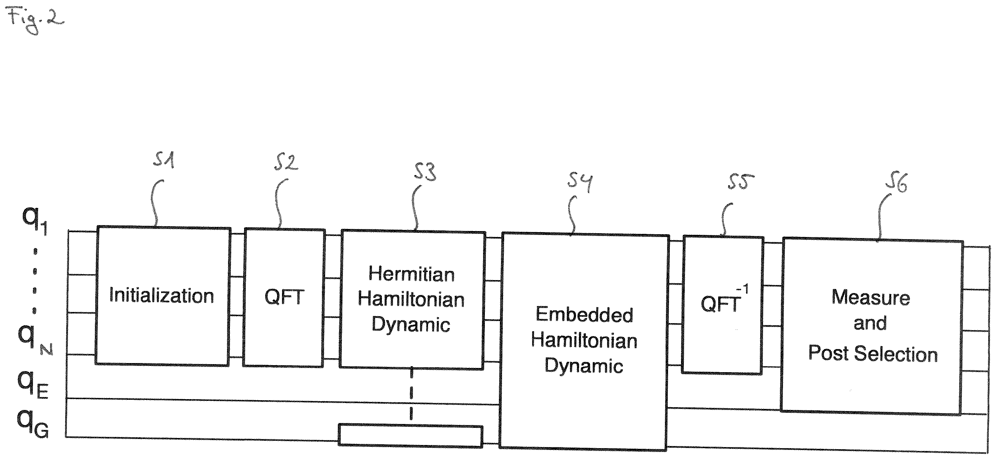

Fig. 2 is a schematic representation of a quantum circuit for solving a partial differential equation representable in the form mentioned above, wherein the first and second Hamiltonian H₀ and H₁ are diagonalizable by a quantum Fourier transform (QFT). The partial differential equation is solved using a system of N+2 qubits comprising N system qubits q₁, ..., q_{N}, a first ancillary qubit q_{E} and a second ancillary qubit q_{G}.

In a first step, S1, the qubits are initialized. Then, in step S2, a quantum Fourier transform is applied to the N system qubits. After that, the hermitian Hamiltonian dynamics governed by the Hamiltonian H₀ is implemented in step S3. As H₀ is diagonal in Fourier space, the evolution is implemented using the system qubits and the second ancillary qubit q_{G}. Next, in step S4, the evolution corresponding to the anti-hermitian part A is implemented via an embedded Hamiltonian evolution on all system qubits, the first ancillary qubit q_{E} and the second ancillary qubit q_{G}. In step S5, the inverse quantum Fourier transform is implemented on the system qubits. Finally, in step S6, the first ancillary qubit q_{E} is measured, a post-selection is carried out conditioned on the measured state of the first ancillary qubit and a measurement on the system qubits is carried out to obtain a solution f(t, Xᵢ) of the partial differential equation.

Now, the steps S1 to S6 of the quantum algorithm for solving the partial differential equation defined above will be explained in more detail.

### First step (S1)

### Preparation of an initial state by encoding the boundary condition

In the first step, S1, the system comprising the N system qubits q₁, ..., q_{N}, the first ancillary qubit q_{E} and the second ancillary qubit q_{G} is prepared in an initial state given by the state vector |Φ₀〉 = |φ₀〉 ⊗ |0_{E}〉 ⊗ |0_{G}〉. Here, |φ₀〉 is the state vector of the N system qubits q₁, ..., q_{N} encoding the boundary condition, |0_{E}〉 is one of two basis state vectors of the first ancillary qubit q_{E} and an eigenvector of the Pauli Z-matrix and |0_{G}〉 is one of two basis state vectors of the second ancillary qubit q_{G} and an eigenvector of the Pauli Z-matrix. |0_{E}〉 and |0_{G}〉 may correspond to the ground state of the first ancillary qubit q_{E} and the second ancillary qubit q_{G}, respectively. The boundary condition is of the form f(t₀, X) = g(X) for some ${t}_{0} ∈ ℝ$, wherein g maps at least a subspace of the k-dimensional real space ${ℝ}^{k}$ to at least a subspace of the space 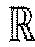 of real numbers. Generally, this allows for an encoding of the boundary condition via the following equation: $\left|{φ}_{0}\right〉 = {\sum }_{i = 0}^{{n}_{Q} - 1} \frac{g \left({X}_{i}\right)}{\sqrt{Λ}} \left|{x}_{i}\right〉$ wherein $Λ = {\sum }_{i = 0}^{{n}_{Q - 1}} {\left|g\left({x}_{i}\right)\right|}^{2}$ is a normalization factor ensuring that the coefficients of the state vector |φ₀〉 are smaller than 1 and the state vector |φ₀〉 is normalized. |*xᵢ*〉, *i =* 0, ... , *n_{Q}* are the n_{Q} = 2^{N} basis state vectors of the N system qubits q₁, ..., q_{N} . The basis state vectors may be the computational basis state vectors |*xᵢ*〉 = |a₁ ... a_{N}〉, wherein aⱼ ∈ {0,1} and xᵢ = a₁2⁰ + a₂2¹ + ... + a_{N}2^{N-1}.

In the special case of the Black-Scholes equation, the boundary condition is given by C(T, S) = max{K-S, 0} for a final time T. This final condition may be mapped to an initial condition via the transformation t ↦ T - t. As the Black-Scholes equation is homogeneous in X = log(S), it is favorable to encode the initial condition symmetrically. I. e., the initial condition is encoded in the following form: $\left|{φ}_{0}\right〉 = {\sum }_{j = 0}^{{N}_{max}} \frac{K - {e}^{- \frac{{X}_{max}}{2} + j ⋅ {δ}_{x}}}{\sqrt{Λ}} \left(\left|{x}_{j}\right〉+\left|{x}_{N - 1 - j}\right〉\right)$ where ${N}_{max} = \left[\left({n}_{Q}-1\right)\left(\frac{log \left(K\right)}{2 {X}_{max}}+\frac{1}{4}\right)\right] , {δ}_{x} = \frac{2 {X}_{max}}{{n}_{Q} - 1}$, Λ is a normalization factor to ensure that |φ₀〉 is normalized to 1 and Xₘₐₓ = 2log(3K). This encoding is possible by techniques known in the art, see e.g. Document 1. In this way, step S1, i. e. the initialization of the N+2 qubits may be achieved.

### Second to fifth step (S2 to S5)

### Implementation of the Hamiltonian evolution on a quantum computer

Next, the implementation of the Hamiltonian evolution of the initial state according to 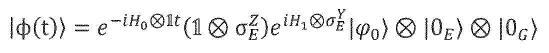 on a digital quantum computer via a set of one- and two-qubit gates will be described.

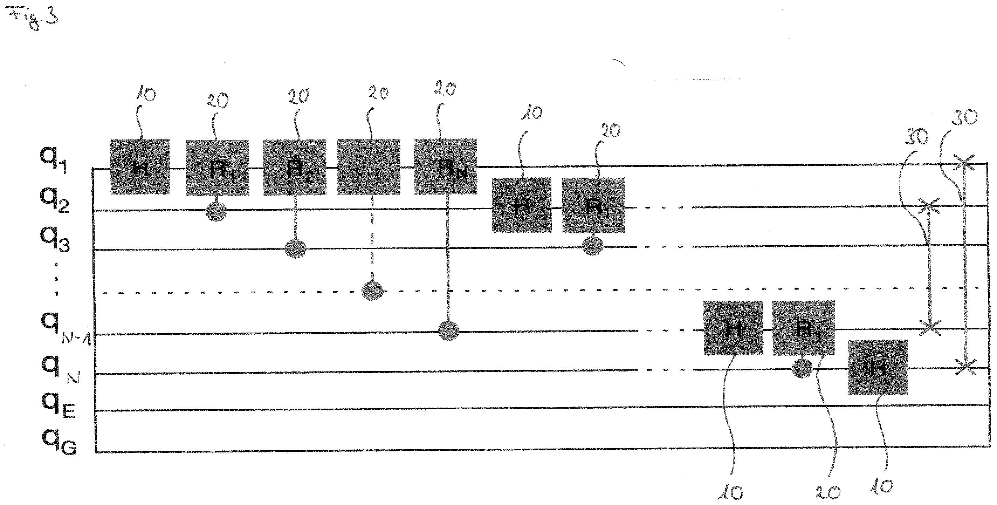

As was explained above, we focus on the special class of partial differential equations where the first and second Hamiltonians H₀ and H₁ are diagonalizable by a quantum Fourier transform. I. e., the Hamiltonian evolution may be rewritten in the following form: 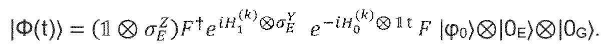 Thus, after the state initialization in step S1, a quantum Fourier transform (QFT) is implemented in step S2. A quantum circuit of an implementation of the quantum Fourier transform is depicted in Fig. 3. The quantum Fourier transform is implemented via the Hadamard gate (H) 10, the controlled phase gate 20, Rₘ = R(φ = π/2^{m}), and the swap gate 30. This allows for an efficient implementation of the quantum Fourier transform.

As mentioned above, the Fourier-transformed Hamiltonians ${H}_{α}^{\left(k\right)} = {FH}_{α} {F}^{†}$ are diagonal, ${{H}_{α}}^{\left(k\right)} = {FH}_{α} {F}^{†} = {\sum }_{{s}_{1} … {s}_{N} = 0}^{1} {h}_{{s}_{1} … {s}_{N}}^{\left(α\right)} \left|{s}_{1}…{s}_{N}\right〉 \left〈{s}_{1}…{s}_{N}\right|$, α = 0 or 1. In the case of the Black-Scholes equation, ${h}_{j}^{\left(0\right)} = - \left(\frac{{σ}^{2}}{2}-r\right) {p}_{j}$ and ${h}_{j}^{\left(1\right)} = arccos \left({e}^{{w}_{j}}\right)$, wherein *j* = *s*₁ · 2⁰ + *s*₂ · 2¹ + ... + *s_{N} ·* 2^{*N*-1}, ${w}_{j} = - t \left(\frac{{σ}^{2}}{2}{p}_{j}^{2}+r\right)$ and ${p}_{j} = sin \left(\frac{2 πj}{{n}_{Q}}\right) / δ$, where $δ = \frac{2 {X}_{max}}{{n}_{Q} - 1}$ . As was explained in the general description, ${H}_{α}^{\left(k\right)}$ may be represented in the form ${\left(-t\right)}^{1 - α} {H}_{α}^{\left(k\right)} = {\sum }_{{j}_{1} … {j}_{N} = 0}^{1} {β}_{{j}_{1} … {j}_{N}}^{\left(α\right)} {σ}_{1}^{{j}_{1}} ⊗ … ⊗ {σ}_{N}^{{j}_{N}}$ ${β}_{{j}_{1} … {j}_{N}}^{\left(α\right)} = \frac{{\left(-t\right)}^{1 - α}}{{n}_{Q}} {\sum }_{{s}_{1} … {s}_{N} = 0}^{1} {h}_{{s}_{1} … {s}_{N}}^{\left(α\right)} ⋅ {\left(-1\right)}^{{\sum }_{l = 1}^{N} {s}_{l} {j}_{l}} ,$ wherein 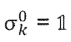 is the identity and ${σ}_{k}^{1} = {σ}_{k}^{Z}$ is the Pauli Z-matrix, for all k = 1, ...N.

As H_{α}^{(k)} is a sum of commuting terms, and ${e}^{iβ \left({σ}_{{i}_{1}}^{Z}⊗…⊗{σ}_{{i}_{k}}^{Z}\right) ⊗ {σ}_{E}^{Y}} = SH {e}^{iβ {σ}_{{i}_{1}}^{Z} ⊗ … ⊗ {σ}_{{i}_{k}}^{Z} ⊗ {σ}_{E}^{Z}} HS * ,$ (6) the evolution according to the two Hamiltonians may be implemented via a product of unitary operators of the form ${U}_{{j}_{1} … {j}_{N}}^{\left(α\right)} = {e}^{{iβ}_{{j}_{1} … {j}_{N}}^{\left(α\right)} {σ}_{1}^{{j}_{1}} … ⊗ {σ}_{N}^{{j}_{N}} ⊗ {σ}_{E}^{α}} ,$ wherein jₖ = 0 or 1 and α = 0 or 1, and 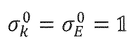 and ${σ}_{k}^{1} = {σ}_{E}^{1} = {σ}_{E}^{Z}$.

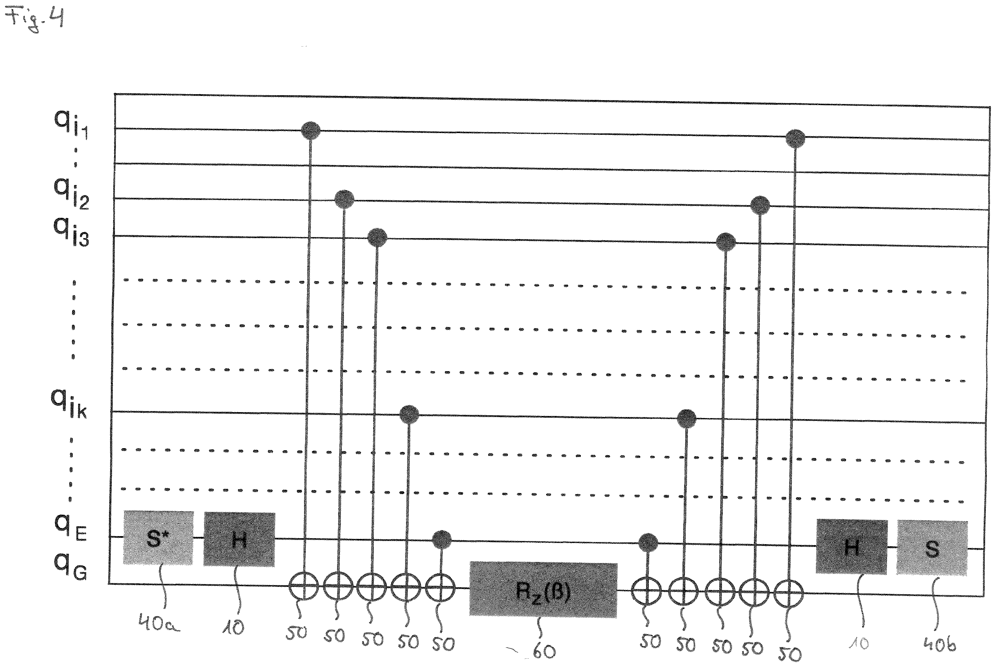

Each of the unitary operators may be implemented by a quantum circuit of the form represented in Fig. 4 as follows:
In the case of the implementation of the second Hamiltonian, the complex conjugate of the phase gate S* (40a) is applied to the first ancillary qubit q_{E}. Then, the Hadamard gate H (10) is applied to the first ancillary qubit q_{E}. Since the sequence of operators ${\prod }_{{j}_{1} … {j}_{N = 1}}^{N} {U}_{{j}_{1} … {j}_{N}}^{\left(1\right)}$ will be applied, and 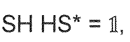 it is sufficient to implement the operator sequence HS* only once when first unitary ${U}_{{j}_{1} … {j}_{N}}^{\left(1\right)}$ is implemented. This step is absent when the evolution according to the first Hamiltonian H₀ is implemented.

Then, a sequence of CNOT-gates 50 is applied. In the case of the first Hamiltonian, for each k for which jₖ = 1 in the tuple (j₁ ... j_{N}), i. e. in the unitary ${U}_{{j}_{1} … {j}_{N}}^{\left(α\right)}$, a CNOT-gate is applied between the second ancillary qubit q_{G} as the target qubit and the respective system qubit qₖ as the control qubit. In the case of the second Hamiltonian, a CNOT-gate is applied between the second ancillary qubit as the target qubit and the first ancillary qubit. Furthermore, for each k for which jₖ = 1 in the tuple (j₁...jₙ), i. e. in the unitary ${U}_{{j}_{1} … {j}_{N}}^{\left(α\right)}$, a CNOT-gate is applied between the second ancillary qubit as the target qubit and the respective system qubit qₖ as the control qubit. The main idea behind this construction is to encode the parity of the involved qubits in the second ancillary qubit q_{G}. When the parity of the involved qubits is even, the state of the second ancillary qubit after the application of the CNOT-gates is |0_{G}〉, when the parity is odd, the state is |1_{G}〉.

Then, a rotation 60 of the form ${R}_{Z} \left({β}_{{j}_{1} … {j}_{N}}^{\left(α\right)}\right)$ is applied to the second ancillary qubit. Here, ${R}_{Z} \left({β}_{{j}_{1} … {j}_{N}}^{\left(α\right)}\right) = {e}^{{jβ}_{{j}_{1} … {j}_{N}}^{\left(α\right)} {σ}_{G}^{Z}}$. When the second ancillary qubit q_{G} is in the state |0_{G}〉, this results in a phase ${e}^{{iβ}_{{j}_{1} … {j}_{N}}^{\left(α\right)}}$. When the second ancillary qubit is in the state |1_{G}〉, this results in a phase ${e}^{- {iβ}_{{j}_{1} … {j}_{N}}^{\left(α\right)}}$.

Then, the same sequence of CNOT-gates as before is applied to transform the second ancillary qubit back into the state |0_{G}〉. I. e., the parity information is "erased".

Finally, in the case of implementing the evolution according to the second Hamiltonian H₁, a Hadamard gate 10 followed by a phase gate 40b is applied to the first ancillary qubit q_{E}. It is sufficient to implement this operator sequence only once, namely when the last unitary ${U}_{{j}_{1} … {j}_{N}}^{\left(1\right)}$ is implemented.

The construction of the whole quantum circuit involves one circuit of the form given in Fig. 4 for each term of the form of the decomposition of the first and second Hamiltonians in the Cartan basis given in Eq. (6). I. e., the circuit will comprise n_{Q} = 2^{N} entangling gates.

Then, the inverse quantum Fourier transform is implemented in step S5. In this way, the Hamiltonian dynamics according to the first Hamiltonian H₀ and the embedded Hamiltonian dynamics of the Hamiltonian ${H}_{1} ⊗ {σ}_{E}^{Y}$ comprising the second Hamiltonian may be implemented in the steps S3 to S5. Finally, the operator 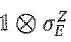 is applied to the N system qubits and the first ancillary qubit.

### Sixth step (S6)

### Measurement and post-selection

To obtain the solution f(T, X) of the partial differential equation, e. g. the solution of the Black-Scholes equation at the maturity time, the first ancillary qubit is measured. When the result of the measurement of the first ancillary qubit is compatible with the state |0_{E}〉, the state is kept and post-processed. Otherwise, the state is discarded and the quantum circuit is applied again. The probability of success of the protocol depends on the probability of recovering the desired dynamics, which will be the case when the first ancillary qubit is in the state |0_{E}〉 (see Eq.(2) above). This probability strongly depends on the time and the risk-free interest rate, but for the usual range of financial parameters its value is always larger than 0.6. Then, the system is measured in the basis of eigenvectors |*xᵢ*〉 to obtain f(T, Xᵢ), respectively $C \left({X}_{i}, T\right) = \sqrt{p \left(\left.{X}_{i}\right|{0}_{E}\right) Λ}$, where p(Xᵢ|0_{E}) is the probability of measuring the eigenvector |xᵢ〉 conditioned to having obtained the state |0_{E}〉 of the first ancillary qubit in the measurement before and Λ is the normalization constant mentioned above.

### Optimized quantum circuit for the quantum Black-Scholes equation

In the following, an optimized quantum circuit for solving the quantum Black Scholes equation is presented. In order to reduce the number of entangling gates, one may consider only the most relevant interactions in the first and second Hamiltonians and approximate the solution by implementing only those terms of the first and second Hamiltonians H₀, H₁, wherein ${H}_{0} = - \left(\frac{{σ}^{2}}{2}-r\right) \hat{p}$ and *H*₁ *= e^{-iAt},* with 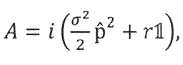 which are most relevant.

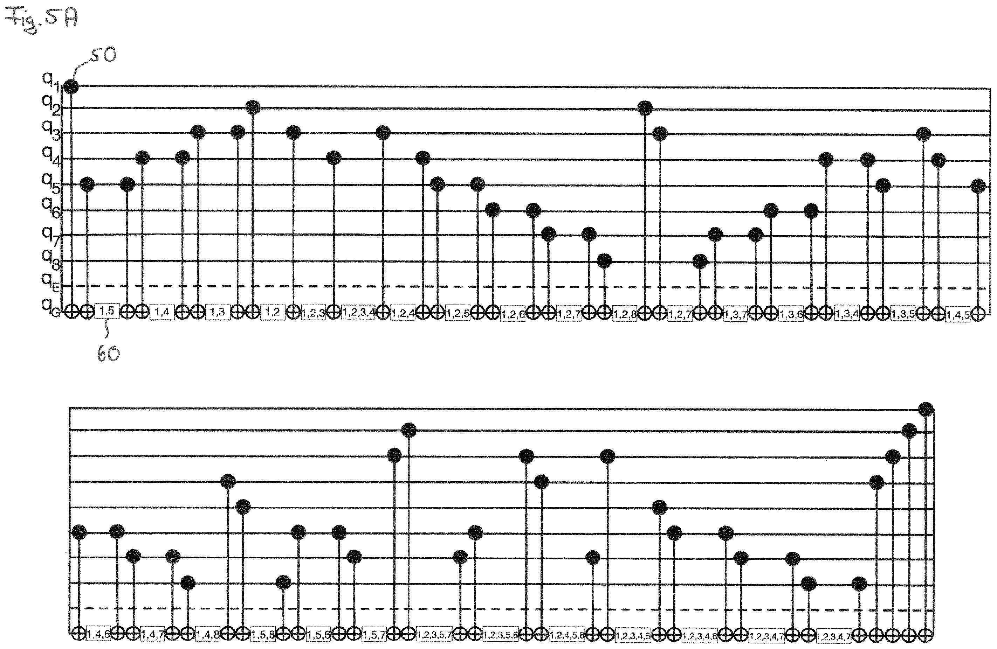

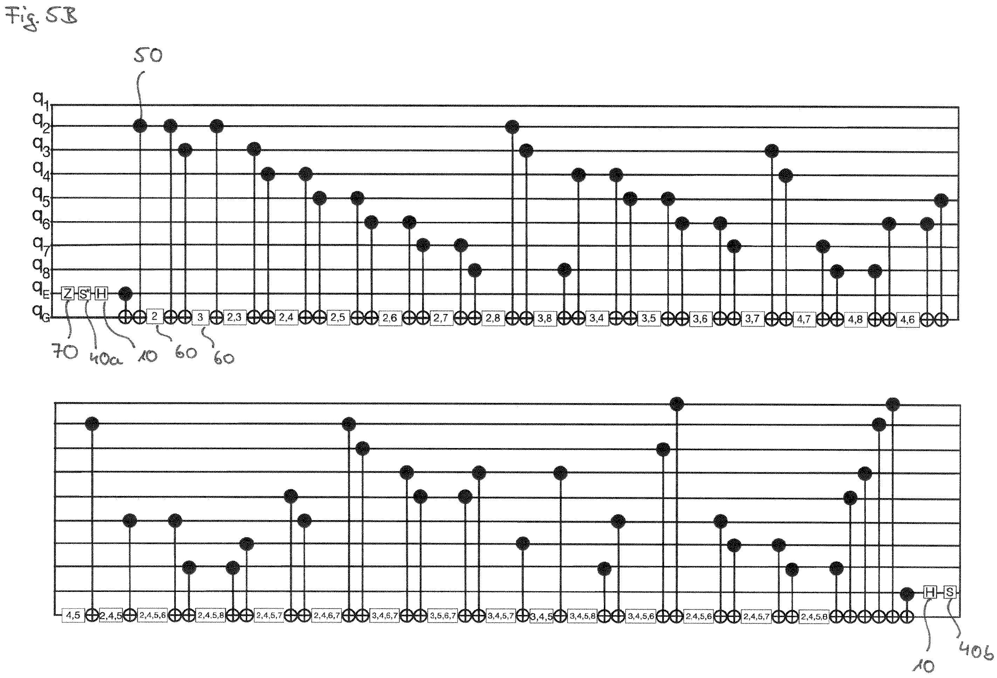

For the particular case of a qubit system comprising 10 qubits, namely N = 8 system qubits, a first ancillary qubit and a second ancillary qubit, a quantum circuit implementing an approximation of the evolution of the Fourier-transformed Hamiltonians H₀^{(k)} and H₁^{(k)} by considering only the 32 largest interactions is shown in Fig. 5A (evolution according to H₀^{(k)}) and Fig. 5B (evolution according to H₁^{(k)}), respectively. The circuit comprises only the *σ^{Z}*-gate (Z=σ^{Z}) 70, the phase gate (S) 40b and its complex conjugate (S*) 40a and the Hadamard gate (H) 10 applied to the first ancillary qubit, the CNOT-gate between certain system qubits or the first ancillary qubit as the control qubit and the second ancillary qubit q_{G} as the target qubit and a phase rotation 60 around the Z axis, ${R}_{z} \left({β}^{\left(α\right)}\right) = {e}^{j {β}^{\left(α\right)} {σ}_{G}^{Z}}$ applied to the second ancillary qubit q_{G}. The operator of the rotation around the Z axis, R_{Z}(β^{(α)}), is depicted as a rectangular box with numbers in Figs 5A and 5B. The value of the angle of rotation β^{(α)} is given by the following formula: ${β}_{{j}_{1} … {j}_{8}}^{\left(α\right)} = \frac{{\left(-t\right)}^{1 - α}}{{n}_{Q}} {\sum }_{{s}_{1} … {s}_{8} = 0}^{1} {h}_{{s}_{1} … {s}_{8}}^{\left(α\right)} {\left(-1\right)}^{{\sum }_{l = 1}^{8} {s}_{l} {j}_{l}} ,$ where j_{I} = 1 for I being one of the numbers in the respective box, and else j_{I} = 0. Recall that ${h}_{j}^{\left(0\right)} = - \left(\frac{{σ}^{2}}{2}-r\right) {p}_{j} , {h}_{j}^{\left(1\right)} = arccos \left({e}^{{w}_{j}}\right) , {w}_{j} = - t \left(\frac{{σ}^{2}}{2}{{p}_{j}}^{2}+r\right) , {p}_{j} = sin \left(\frac{2 πj}{{n}_{Q}}\right) / δ$ and *j = s*₁ · 2⁰ + *s*₂ · 2¹ + ··· *+ s_{N}* · *2*^{*N*-1}. For example, the first rotation of the second ancillary qubit q_{G} around the Z axis in the circuit shown in Fig. 5A is indicated via a box containing the numbers 1 and 5. Thus, the corresponding angle of rotation *β*⁽⁰⁾ is given by ${β}_{1000 1000}^{\left(0\right)} = \frac{\left(-t\right)}{{n}_{Q}} {\sum }_{{s}_{1} … {s}_{8} = 0}^{1} {h}_{{s}_{1} … {s}_{8}}^{\left(0\right)} {\left(-1\right)}^{{s}_{1} + {s}_{5}}$ .

The circuits shown in Fig. 5A and Fig. 5B allow to implement an approximation of the time evolution according to the Fourier-transformed first Hamiltonian H₀^{(k)} and the embedded evolution according to the Fourier-transformed second Hamiltonian H₁^{(k)} with 125 two-qubit gates. Thus, considering also the implementation of the quantum Fourier transform, the quantum algorithm requires 10 qubits and 181 entangling gates. The relative error with respect to implementing all terms of the first and second Hamiltonians H₀ and H₁ is less than 2 %. The algorithm is implementable on a fault tolerant quantum computer, and the expected success probability of the post selection procedure is above 60 %. Such an algorithm is also implementable with quantum computing architectures available today. The algorithm shows a feasible approach for pricing financial derivatives on a digital quantum computer, which defers from the already existing ones that are focused on Monte Carlo simulation to solve the stochastic version of the Black-Scholes equation.

## Claims

1. Quantum computer-implemented method for solving a partial differential equation for a function f which maps at least a subspace of a k-dimensional real space ${ℝ}^{k}$ into at least a subspace of an m-dimensional real space ${ℝ}^{m} , f : {ℝ}^{k} \to {ℝ}^{m}$, f: (t, X) ↦ f(t, X), wherein $t ∈ ℝ , X ∈ {ℝ}^{k - 1}$ , wherein the partial differential equation is representable in the form $\frac{\partial f}{\partial t} = - iQf$ a given boundary condition f(t₀, X) = g(X) for some ${t}_{0} ∈ ℝ$, wherein g maps at least a subspace of the k-dimensional real space ${ℝ}^{k}$ to at least a subspace of the space 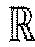 of real numbers, wherein Q is a linear, non-hermitian operator representable as a sum of an anti-hermitian part A and an optional hermitian part H₀, such that the optional hermitian part H₀ and the anti-hermitian part A commute, wherein X is discretized in accordance with a mesh of n_{Q} = 2^{N} points, ${\left\{{X}_{i}\right\}}_{i = 1}^{{n}_{Q}}$, wherein ${X}_{i} ∈ {ℝ}^{k - 1}$, the method comprising the following steps:
i) preparing a qubit system of a quantum computer, the qubit system comprising N system qubits (q₁, ..., q_{N}) and a first ancillary qubit (q_{E}), in an initial state given by a state vector |Φ₀〉 = |φ₀〉 ⊗ |0_{E}〉, wherein $\left|{φ}_{0}\right〉 = {\sum }_{i = 0}^{{n}_{Q} - 1} {φ}_{i} \left|{x}_{i}\right〉$ is a state vector of the N system qubits (q₁, ..., q_{N}) encoding the boundary condition using at most n_{Q} basis state vectors |xᵢ〉 of the N system qubits (q₁, ..., q_{N}) in the coefficients φᵢ of the initial state vector |φ₀〉 of the N system qubits (q₁, ..., q_{N}) as ${φ}_{i} = \frac{g \left({X}_{i}\right)}{\sqrt{Λ}}$, where $∧ = {\sum }_{i = 0}^{{n}_{Q} - 1} {\left|g\left({X}_{i}\right)\right|}^{2}$ or as $\left|{φ}_{0}\right〉 = {\sum }_{j = 0}^{\frac{{n}_{Q}}{2} - 1} \frac{g \left({X}_{j}\right)}{\sqrt{Λ}} \left(\left|{x}_{j}\right〉+\left|{x}_{{n}_{Q} - 1 - j}\right〉\right)$ where $Λ = 2 {\sum }_{j = 0}^{{n}_{Q} / 2 - 1} {\left|g\left({X}_{j}\right)\right|}^{2}$, and |0_{E}〉 is one of two basis state vectors of the first ancillary qubit (q_{E}) and an eigenvector of the Pauli Z-matrix.
ii) implementing a Hamiltonian evolution 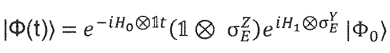 on the quantum computer, with H₀ being the hermitian part of the operator Q as a first Hamiltonian and H₁ = arccos(e^{-iAt}) as a second Hamiltonian, and ${σ}_{E}^{Z}$ and ${σ}_{E}^{Y}$ are the Pauli Z-matrix and the Pauli Y-matrix, respectively, acting on the first ancillary qubit (q_{E}), wherein the term 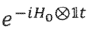 is absent in the Hamiltonian evolution when Q is anti-hermitian;
iii) measuring the first ancillary qubit state and post-selecting the N-qubit state of the N system qubits (q₁, ..., q_{N}) after the measurement on the condition that the first ancillary qubit (q_{E}) is in the state given by the state vector |0_{E}〉 to obtain, at a given time T, the solution f(T, Xᵢ) from a measurement of the post-selected N-qubit state of the system qubits (q₁, ..., q_{N}), wherein the measurement of the post-selected N-qubit state of the N system qubits (q₁, ..., q_{N}) comprises measuring in the basis of the basis state vectors |*xᵢ*〉, i=0, ..., n_{Q}-1 allowing to obtain the solution f(T, Xᵢ) via the relation $f \left(T, {X}_{i}\right) = \sqrt{p \left({X}_{i}\left|{0}_{E}\right.\right) Λ}$, wherein *p*(*Xᵢ*|0*_{E}*) is the conditional probability of measuring the state given by the state vector |xᵢ〉 conditioned on the first ancillary qubit (q_{E}) being in the state given by the state vector |0_{E}〉 and Λ is the normalization constant of the state vector |φ₀〉.

2. Method according to claim 1, wherein the quantum computer is a digital quantum computer and the method comprises the implementation of the Hamiltonian evolution on the digital quantum computer using a universal set of one- and two-qubit gates.

3. Method according to anyone of the preceding claims, wherein the first and/or second Hamiltonian(s) H₀ and H₁ are diagonalizable by a quantum Fourier transform F, i.e. ${H}_{α}^{\left(k\right)} = {FH}_{α} {F}^{†} = {\sum }_{{s}_{1} … {s}_{N} = 0}^{1} {h}_{{s}_{1} … {s}_{N}}^{\left(α\right)} \left|{s}_{1}…{s}_{N}\right〉 \left〈{s}_{1}…{s}_{N}\right|$, wherein $α = 0 , 1 , {h}_{{s}_{1} … {s}_{N}}^{\left(α\right)}$ is real, and ${\left(-t\right)}^{1 - α} {H}_{α}^{\left(k\right)} = {\sum }_{{j}_{1} … {j}_{N} = 0}^{1} {β}_{{j}_{1} … {j}_{N}}^{\left(α\right)} {σ}_{1}^{{j}_{1}} ⊗ … ⊗ {σ}_{N}^{{j}_{N}}$, wherein 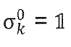 is the identity and ${σ}_{k}^{1} = {σ}_{k}^{Z}$ is the Pauli Z-matrix acting on the qubit *qₖ*, for all k = 1, ...N, and ${β}_{{j}_{1} … {j}_{N}}^{\left(α\right)} = \frac{{\left(-t\right)}^{1 - α}}{{n}_{Q}} {\sum }_{{s}_{1} … {s}_{N} = 0}^{1} {h}_{{s}_{1} … {s}_{N}}^{\left(α\right)} ⋅ {\left(-1\right)}^{{\sum }_{l = 1}^{N} {s}_{l} {j}_{l}}$ , and wherein the implementation of the Hamiltonian evolution comprises an implementation of the quantum Fourier transform.

4. Method according to claim 3, wherein the first Hamiltonian H₀ is diagonalizable by a quantum Fourier transform, and the method further comprises in step ii) preparing a qubit system comprising the N system qubits (q₁, ..., q_{N}), the first ancillary qubit (q_{E}) and a second ancillary qubit (q_{G}) in the initial state given by the state vector |Φ₀〉 = |φ₀〉 ⊗ |0_{E}〉⊗ |0_{G}〉, wherein |0_{G}〉 is one of two basis state vectors of the second ancillary qubit (q_{G}) and an eigenvector of the Pauli Z-matrix, and wherein the implementation of the Hamiltonian evolution according to the first Hamiltonian H₀ in step iii) comprises the following steps:
1) application of the quantum Fourier transform to the N system qubits (q₁, ..., q_{N}), then
2) for each tuple (*j*₁ ... *j_{N}*), wherein *jₖ* = 0 or 1 for k = 1, ..., N:
a) for each k = 1, ..., N for which jₖ = 1 application of a CNOT-gate between the second ancillary qubit (q_{G}) as the target qubit and the system qubit *qₖ* as the control qubit, then
b) application of a rotation ${R}_{Z} \left({β}_{{j}_{1} … {j}_{N}}^{\left(0\right)}\right) = {e}^{{iβ}_{{j}_{1} … {j}_{N}}^{\left(0\right)} {σ}_{G}^{Z}}$ to the second ancillary qubit (q_{G}), wherein ${β}_{{j}_{1} … {j}_{N}}^{\left(0\right)} = \frac{\left(-t\right)}{{n}_{Q}} {\sum }_{{s}_{1} … {s}_{N = 0}}^{1} {h}_{{s}_{1} … {s}_{N}}^{\left(0\right)} ⋅ {\left(-1\right)}^{{\sum }_{l = 1}^{N} {s}_{l} {j}_{l}}$, then
c) for each k = 1, ..., N for which jₖ = 1 application of a CNOT-gate between the second ancillary qubit (q_{G}) as the target qubit and the system qubit *qₖ* as the control qubit, then
3) application of the inverse of the quantum Fourier transform to the N system qubits (q1, ..., q_{N}).

5. Method according to claim 3 or 4, wherein the second Hamiltonian H₁ is diagonalizable by a quantum Fourier transform, and the method further comprises in step ii) preparing a qubit system comprising the N system qubits (q₁, ..., q_{N}), the first ancillary qubit (q_{E}) and a second ancillary qubit (q_{G}) in the initial state given by the state vector |Φ₀〉 = |φ₀〉 ⊗ |0_{E}〉⊗ |0_{G}〉, wherein |0_{G}〉 is one of two basis state vectors of the second ancillary qubit (q_{G}) and an eigenvector of the Pauli Z-matrix, and wherein the implementation of the Hamiltonian evolution according to the second Hamiltonian H₁ in step iii) comprises the following steps:
1) application of the quantum Fourier transform to the N system qubits (q₁, ..., q_{N}), then
2) application of the complex conjugate of the phase gate followed by the Hadamard gate to the first ancillary qubit (q_{E}), then
3) for each tuple (*j*₁ *... j_{N}*), wherein *jₖ* = 0 or 1 for k = 1, ..., N:
a) application of a CNOT-gate between the second ancillary qubit (q_{G}) as the target qubit and the first ancillary qubit (q_{E}) as the control qubit, and for each k = 1, ..., N for which jₖ = 1 application of a CNOT-gate between the second ancillary qubit q_{G} as the target qubit the system qubit qₖ as the control qubit, then
b) application of a rotation ${R}_{Z} \left({β}_{{j}_{1} … {j}_{N}}^{\left(1\right)}\right) = {e}^{{jβ}_{{j}_{1} … {j}_{N}}^{\left(1\right)} {σ}_{G}^{Z}}$ to the second ancillary qubit (q_{G}), wherein ${β}_{{j}_{1} … {j}_{N}}^{\left(1\right)} = \frac{1}{{n}_{Q}} {\sum }_{{s}_{1} … {s}_{N} = 0}^{1} {h}_{{s}_{1} … {s}_{N}}^{\left(1\right)} ⋅ {\left(-1\right)}^{{\sum }_{l = 1}^{N} {s}_{l} {j}_{l}}$, then
c) application of a CNOT-gate between the second ancillary qubit (q_{G}) as the target qubit and the first ancillary qubit (q_{E}) as the control qubit, and for each k = 1, ..., N for which jₖ = 1 application of a CNOT-gate between the second ancillary qubit q_{G} as the target qubit the system qubit qₖ as the control qubit, then
4) application of the Hadamard gate H followed by the phase gate S to the first ancillary qubit (q_{E}),
5) application of the inverse of the quantum Fourier transform to the N system qubits (q1, ..., q_{N}).

6. Method according to anyone of the preceding claims, wherein the anti-hermitian operator Q is a polynomial of a momentum operator.

7. Method according to claim 6, wherein the partial differential equation is the Black-Scholes equation $\frac{\partial C}{\partial t} + rS \frac{\partial C}{\partial S} + \frac{1}{2} {σ}^{2} {S}^{2} \frac{{\partial }^{2} C}{\partial {S}^{2}} = rC ,$ wherein S ≥ 0 is the value of the underlying stock, r is the constant risk-free interest rate, σ is the constant volatility of the stock, and the boundary condition is given by C(S, T) = max{K-S, 0} for some K ≥ 0 at the maturity time T.

8. Method according to claim 7, wherein encoding of the boundary condition comprises encoding the boundary condition in the state represented by the state vector $\left|{φ}_{0}\right〉 = {\sum }_{j = 0}^{{N}_{max}} \frac{K - {e}^{- \frac{{X}_{max}}{2} + j ⋅ {δ}_{x}}}{\sqrt{Λ}} \left(\left|{x}_{j}\right〉+\left|{x}_{{n}_{Q} - 1 - j}\right〉\right)$ where ${N}_{max} = \left[\left({n}_{Q}-1\right)\left(\frac{log \left(K\right)}{2 {X}_{max}}+\frac{1}{4}\right)\right] , Λ = 2 {\sum }_{j = 0}^{{N}_{max}} {\left(K-{e}^{- \frac{{X}_{max}}{2} + j ⋅ {δ}_{x}}\right)}^{2}$ is a normalization factor, ${δ}_{x} = \frac{2 {X}_{max}}{{n}_{Q} - 1}$ and Xₘₐₓ = 2log(3K).

9. Method according to anyone of the preceding claims, wherein the quantum computer is a superconducting quantum computer.

10. Apparatus (1) for solving a partial differential equation for a function f which maps at least a subspace of a k-dimensional real space ${ℝ}^{k}$ into at least a subspace of an m-dimensional real space ${ℝ}^{m} , f : {ℝ}^{k} \to {ℝ}^{m}$, f: (t, X) ↦ f(t, X), wherein $t ∈ ℝ , X ∈ {ℝ}^{k - 1}$, wherein the partial differential equation is representable in the form $\frac{\partial f}{\partial t} = - iQf$ with a given boundary condition f(t₀, X) = g(X) for some ${t}_{0} ∈ ℝ$, wherein g maps at least a subspace of the k-dimensional real space ${ℝ}^{k}$ to at least a subspace of the space 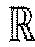 of real numbers, wherein Q is a linear, non-hermitian operator representable as a sum of an anti-hermitian part A and an optional hermitian part H₀, such that the optional hermitian part H₀ and the anti-hermitian part A commute, wherein X is discretized in accordance with a mesh of n_{Q} = 2^{N} points, ${\left\{{X}_{i}\right\}}_{i = 1}^{{n}_{Q}}$, wherein ${X}_{i} ∈ {ℝ}^{k - 1}$, the apparatus comprising:
a quantum computer comprising:
a qubit system (2) comprising N system qubits (q_{1 ,}..., q_{N}) and a first ancillary qubit (q_{E});
quantum state preparation means (4) for preparing the qubit system (2) in an initial state given by a state vector |Φ₀〉 = |φ₀〉 ⊗ |0_{E}〉, wherein $\left|{φ}_{0}\right〉 = {\sum }_{i = 0}^{{n}_{Q} - 1} {φ}_{i} \left|{x}_{i}\right〉$ is a state vector of the N system qubits (q₁ ,..., q_{N}) encoding the boundary condition using at most n_{Q} basis state vectors |*xᵢ*〉 of the N system qubits (q₁, ..., q_{N}) in the coefficients φᵢ of the initial state vector |φ₀〉 of the N system qubits (q₁, ..., q_{N}) as ${φ}_{i} = \frac{g \left({X}_{i}\right)}{\sqrt{Λ}}$, where $∧ = {\sum }_{i = 0}^{{n}_{Q} - 1} {\left|g\left({X}_{i}\right)\right|}^{2}$ or as $\left|{φ}_{0}\right〉 = {\sum }_{j = 0}^{\frac{{n}_{Q}}{2} - 1} \frac{g \left({X}_{j}\right)}{\sqrt{Λ}} \left(\left|{x}_{j}\right〉+\left|{x}_{{n}_{Q} - 1 - j}\right〉\right)$ where $∧ = 2 {\sum }_{j = 0}^{{n}_{Q} / 2 - 1} {\left|g\left({X}_{j}\right)\right|}^{2}$, and |0_{E}〉 is one of two basis state vectors of the first ancillary qubit (q_{E}) and an eigenvector of the Pauli Z-matrix;
implementation means (5) for implementing a Hamiltonian evolution 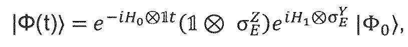 with H₀ being the hermitian part of the operator Q as a first Hamiltonian and H₁ = arccos(e^{-iAt}) as a second Hamiltonian, and ${σ}_{E}^{Z}$ and ${σ}_{E}^{Y}$ are the Pauli Z-matrix and the Pauli Y-matrix, respectively, acting on the first ancillary qubit (q_{E}), wherein the term 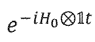 is absent in the Hamiltonian evolution when Q is anti-hermitian; projection means (6) for projecting the state of the first ancillary qubit (q_{E}) in the state given by the state vector |0_{E}〉, and measurement means for measuring the state of the N system qubits (q₁ ...., q_{N}), in the basis of the basis state vectors |*xᵢ*〉, *i =* 0, ... , *n_{Q} -* 1; post-selection means for post-selecting the N-qubit state of the N system qubits (q_{1 ,}..., q_{N}) after the measurement of the first ancillary qubit (q_{E}) on the condition that the first ancillary qubit (q_{E}) is in the state given by the state vector |0_{E}〉;
the apparatus further comprising classical data-processing means for obtaining, at a given time T, the solution f(T, Xᵢ) from a measurement of the measured N-qubit state of the N system qubits (q_{1 ,}..., q_{N}) via the relation $f \left(T, {X}_{i}\right) = \sqrt{p \left(\left.{X}_{i}\right|{0}_{E}\right) Λ}$, wherein *p*(*Xᵢ*|0*_{E}*) is the conditional probability of measuring the state given by the state vector |xᵢ〉 conditioned on the first ancillary qubit (q_{E}) being in the state given by the state vector |0_{E}〉 and Λ is the normalization constant of the state vector |φ₀〉.

11. Apparatus according to claim 10, wherein the qubit system (2) further comprises a second ancillary qubit (q_{G}) for embedding the Hamiltonian evolution according to the first and/or second Hamiltonian in a qubit system comprising the additional second ancillary qubit (q_{G}).

12. Apparatus according to claim 10 or 11, wherein the qubits of the qubit system (2) are superconducting qubits.

## Patentansprüche

1. Quantencomputer-implementiertes Verfahren zur Lösung einer partiellen Differentialgleichung für eine Funktion f, die mindestens einen Unterraum eines k-dimensionalen reellen Raums ${ℝ}^{k}$ in mindestens einen Unterraum eines m-dimensionalen reellen Raums ${ℝ}^{m}$ abbildet, f: ${ℝ}^{k} \to {ℝ}^{m}$, f: (t, X) → f(t, X), wobei $t ∈ ℝ , X ∈ {ℝ}^{k - 1}$, wobei die partielle Differentialgleichung in der Form $\frac{\partial f}{\partial t} = - iQf$ darstellbar ist, mit einer gegebenen Randbedingung f(t₀, X) = g(X) für ein ${t}_{0} ∈ ℝ$, wobei g mindestens einen Unterraum des k-dimensionalen reellen Raums ${ℝ}^{k}$ auf mindestens einen Unterraum des Raums R reeller Zahlen abbildet, wobei Q ein linearer, nicht-hermitischer Operator ist, der als Summe eines antihermitischen Teils A und eines optionalen hermitischen Teils H₀ darstellbar ist, so dass der optionale hermitische Teil H₀ und der antihermitische Teil A kommutieren, wobei X gemäß einem Gitter aus n_{Q} = 2^{N} Punkten, ${\left\{{X}_{i}\right\}}_{i = 1}^{{n}_{Q}}$, diskretisiert wird, wobei ${X}_{i} ∈ {ℝ}^{k - 1}$, wobei das Verfahren die folgenden Schritte umfasst:
i) Vorbereiten eines Qubit-Systems eines Quantencomputers, wobei das Qubit-System N System-Qubits (q₁, ..., q_{N}) und ein erstes Hilfsqubit (q_{E}) in einem Anfangszustand umfasst, der durch einen Zustandsvektor |Φ₀〉 = |φ₀〉 ⊗ |0_{E}〉 gegeben ist, wobei $\left|{φ}_{0}\right〉 = {\sum }_{i = 0}^{{n}_{Q} - 1} {φ}_{i} \left|{x}_{i}\right〉$ ein Zustandsvektor der N System-Qubits (q₁, ..., q_{N}) ist, der die Randbedingung unter Verwendung von höchstens n_{Q} Basis-Zustandsvektoren |xᵢ〉 der N System-Qubits (q₁, ..., q_{N}) in den Koeffizienten *φᵢ* des Anfangszustandsvektors |*φ*₀〉 der N System-Qubits (q₁, ..., q_{N}) als ${φ}_{i} = \frac{g \left({X}_{i}\right)}{\sqrt{Λ}}$ kodiert, wobei $Λ = {\sum }_{i = 0}^{{n}_{Q} - 1} {\left|g\left({X}_{i}\right)\right|}^{2}$, oder als $\left|{φ}_{0}\right〉 = {\sum }_{j = 0}^{\frac{{n}_{Q}}{2} - 1} \frac{g \left({X}_{j}\right)}{\sqrt{Λ}} \left(\left|{x}_{j}\right〉+\left|{x}_{{n}_{Q} - 1 - j}\right〉\right)$ kodiert, wobei $Λ = 2 {\sum }_{j = 0}^{{n}_{Q} / 2 - 1} {\left|g\left({X}_{j}\right)\right|}^{2}$, und wobei |0_{E}〉 einer von zwei Basiszustandsvektoren des ersten Hilfsqubits (q_{E}) und ein Eigenvektor der Pauli-Z-Matrix ist;
ii) Implementieren einer Hamilton-Evolution 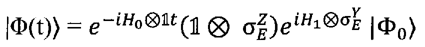 auf dem Quantencomputer, wobei H₀ der hermitische Teil des Operators Q als erster Hamilton-Operator und H₁ = arccos(e^{-iAt}) als zweiter Hamilton-Operator ist, und wobei ${σ}_{E}^{Z}$ und ${σ}_{E}^{Y}$ die Pauli-Z-Matrix bzw. die Pauli-Y-Matrix sind, die auf das erste Hilfsqubit (q_{E}) wirken, wobei der Term 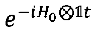 in der Hamilton-Evolution fehlt, wenn Q antihermitisch ist;
iii) Messen des Zustands des ersten Hilfsqubits und Nachselektieren des N-Qubit-Zustands der N System-Qubits (q₁, ..., q_{N}) nach der Messung unter der Bedingung, dass sich das erste Hilfsqubit (q_{E}) im durch den Zustandsvektor |0_{E}〉 gegebenen Zustand befindet, um zu einem bestimmten Zeitpunkt T die Lösung f(T, Xᵢ) aus einer Messung des nachselektierten N-Qubit-Zustands der N System-Qubits (q₁, ..., q_{N}) zu erhalten, wobei das Messen des nachselektieren N-Qubit-Zustands der N System-Qubits (q₁, ..., q_{N}) das Messen in der Basis der Basis-Zustandsvektoren |xᵢ〉, i = 0, ..., n_{Q}-1 umfasst, was das Erhalten der Lösung f(T, Xᵢ) über die Beziehung $f \left(T, {X}_{i}\right) = \sqrt{p \left(\left.{X}_{i}\right|{0}_{E}\right) Λ}$ erlaubt, wobei p(Xᵢ|0_{E}) die bedingte Wahrscheinlichkeit ist, den durch den Zustandsvektor |xᵢ〉 gegebenen Zustand zu messen, unter der Bedingung, dass sich das erste Hilfsqubit (q_{E}) im durch den Zustandsvektor |O_{E}〉 gegebenen Zustand befindet, und A die Normierungskonstante des Zustandsvektors |*φ*₀〉 ist.

2. Verfahren nach Anspruch 1, wobei der Quantencomputer ein digitaler Quantencomputer ist und das Verfahren die Implementierung der Hamilton-Evolution auf dem digitalen Quantencomputer unter Verwendung eines universellen Satzes von Ein- und Zwei-Qubit-Gattern umfasst.

3. Verfahren nach einem der vorangehend Ansprüche, wobei der erste und/oder der zweite Hamilton-Operator H₀ und H₁ durch eine Quanten-Fourier-Transformation F diagonalisierbar ist/sind, d. h. ${H}_{α}^{\left(k\right)} = {FH}_{α} {F}^{†} = {\sum }_{{s}_{1} … {s}_{N} = 0}^{1} {h}_{{s}_{1} … {s}_{N}}^{\left(α\right)} \left|{s}_{1}…{s}_{N}\right〉 \left〈{s}_{1}…{s}_{N}\right|$, wobei $α = 0 , 1 , {h}_{{s}_{1} … {s}_{N}}^{\left(α\right)}$ eine reelle Zahl ist, und ${\left(-t\right)}^{1 - α} {H}_{α}^{\left(k\right)} = {\sum }_{{j}_{1} … {j}_{N} = 0}^{1} {β}_{{j}_{1} … {j}_{N}}^{\left(α\right)} {σ}_{1}^{{j}_{1}} ⊗ … ⊗ {σ}_{N}^{{j}_{N}}$, wobei 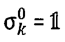 die Identität ist und ${σ}_{k}^{1} = {σ}_{k}^{Z}$ die auf das Qubit qₖ wirkende Pauli-Z-Matrix ist, für alle k = 1, ... N, und wobei ${β}_{{j}_{1} … {j}_{N}}^{\left(α\right)} = \frac{{\left(-t\right)}^{1 - α}}{{n}_{Q}} {\sum }_{{s}_{1} … {s}_{N} = 0}^{1} {h}_{{s}_{1} … {s}_{N}}^{\left(α\right)} ⋅ {\left(-1\right)}^{{\sum }_{l = 1}^{N} {s}_{l} {j}_{l}}$, und wobei die Implementierung der Hamilton-Evolution eine Implementierung der Quanten-Fourier-Transformation umfasst.

4. Verfahren nach Anspruch 3, wobei der erste Hamilton-Operator H₀ durch eine Quanten-Fourier-Transformation diagonalisierbar ist und das Verfahren ferner in Schritt ii) das Vorbereiten eines Qubit-Systems umfasst, das die N System-Qubits (q₁, ..., q_{N}), das erste Hilfsqubit (q_{E}) und ein zweites Hilfsqubit (q_{G}) im durch den Zustandsvektor |Φ₀〉 = |φ₀〉 ⊗ |0_{E}〉⊗ |0G〉 gegebenen Anfangszustand umfasst, wobei |0_{G}〉 einer von zwei Basiszustandsvektoren des zweiten Hilfsqubits (q_{G}) und ein Eigenvektor der Pauli-Z-Matrix ist, und wobei die Implementierung der Hamilton-Evolution gemäß dem ersten Hamilton-Operator H₀ in Schritt iii) die folgenden Schritte umfasst:
1) Anwenden der Quanten-Fourier-Transformation auf die N System-Qubits (q₁, ..., q_{N}), dann
2) für jedes Tupel (*j₁* ... *j_{N}*), wobei *jₖ* = 0 oder 1 für k = 1, ..., N:
a) für jedes k = 1, ..., N, für das jₖ = 1, Anwenden eines CNOT-Gatters zwischen dem zweiten Hilfsqubit (q_{G}) als das Zielqubit und dem System-Qubit *qₖ* als das Kontrollqubit, dann
b) Anwenden einer Rotation ${R}_{Z} \left({β}_{{j}_{1} … {j}_{N}}^{\left(0\right)}\right) = {e}^{{jβ}_{{j}_{1} … {j}_{N}}^{\left(0\right)} {σ}_{G}^{Z}}$ auf das zweite Hilfsqubit (q_{G}), wobei ${β}_{{j}_{1} … {j}_{N}}^{\left(0\right)} = \frac{\left(-t\right)}{{n}_{Q}} {\sum }_{{s}_{1} … {s}_{N} = 0}^{1} {h}_{{s}_{1} … {s}_{N}}^{\left(0\right)} ⋅ {\left(-1\right)}^{{\sum }_{l = 1}^{N} {s}_{l} {j}_{l}}$, dann
c) für jedes k = 1,...,N, für das jₖ = 1, Anwenden eines CNOT-Gatters zwischen dem zweiten Hilfsqubit (q_{G}) als das Zielqubit und dem System-Qubit *qₖ* als das Kontrollqubit, dann
3) Anwenden der Umkehrung der Quanten-Fourier-Transformation auf die N System-Qubits (q₁, ..., q_{N}).

5. Verfahren nach Anspruch 3 oder 4, wobei der zweite Hamilton-Operator H₁ durch eine Quanten-Fourier-Transformation diagonalisierbar ist und das Verfahren ferner in Schritt ii) das Vorbereiten eines Qubit-Systems umfasst, das die N System-Qubits (q₁, ..., q_{N}), das erste Hilfsqubit (q_{E}) und ein zweites Hilfsqubit (q_{G}) im durch den Zustandsvektor |Φ₀〉 = |φ₀〉 ⊗ |0_{E})⊗ |0_{G}〉 gegebenen Anfangszustand umfasst, wobei |0_{G}〉 einer von zwei Basiszustandsvektoren des zweiten Hilfsqubits (q_{G}) und ein Eigenvektor der Pauli-Z-Matrix ist, und wobei die Implementierung der Hamilton-Evolution gemäß dem zweiten Hamilton-Operator H₁ in Schritt iii) die folgenden Schritte umfasst:
1) Anwenden der Quanten-Fourier-Transformation auf die N System-Qubits (q₁, ..., q_{N}), dann
2) Anwenden des komplexen Konjugierten des Phasengatters, gefolgt vom Hadamard-Gatter, auf das erste Hilfsqubit (q_{E}), dann
3) für jedes Tupel (*j₁* ... *j_{N}*), wobei *jₖ* = 0 oder 1 für k = 1, ..., N:
a) Anwenden eines CNOT-Gatters zwischen dem zweiten Hilfsqubit (q_{G}) als das Zielqubit und dem ersten Hilfsqubit (q_{E}) als das Kontrollqubit, und für jedes k = 1,..., N, für das jₖ = 1, Anwenden eines CNOT-Gatters zwischen dem zweiten Hilfsqubit q_{G} als das Zielqubit und dem System-Qubit *qₖ* als das Kontrollqubit, dann
b) Anwenden einer Rotation ${R}_{Z} \left({β}_{{j}_{1} … {j}_{N}}^{\left(1\right)}\right) = {e}^{{jβ}_{{j}_{1} … {j}_{N}}^{\left(1\right)} {σ}_{G}^{Z}}$ auf das zweite Hilfsqubit (q_{G}), wobei ${β}_{{j}_{1} … {j}_{N}}^{\left(1\right)} = \frac{1}{{n}_{Q}} {\sum }_{{s}_{1} … {s}_{N} = 0}^{1} {h}_{{s}_{1} … {s}_{N}}^{\left(1\right)} ⋅ {\left(-1\right)}^{{\sum }_{l = 1}^{N} {s}_{l} {j}_{l}}$, dann
c) Anwenden eines CNOT-Gatters zwischen dem zweiten Hilfsqubit (q_{G}) als das Zielqubit und dem ersten Hilfsqubit (q_{E}) als das Kontrollqubit, und für jedes k = 1,..., N, für das jₖ = 1, Anwenden eines CNOT-Gatters zwischen dem zweiten Hilfsqubit (q_{G}) als das Zielqubit und dem System-Qubits *qₖ* als das Kontrollqubit, dann
4) Anwenden des Hadamard-Gatters H, gefolgt vom Phasengatter S, auf das erste Hilfsqubit (q_{E}),
5) Anwenden der Umkehrung der Quanten-Fourier-Transformation auf die N System-Qubits (q₁, ..., q_{N}).

6. Verfahren nach einem der vorangehenden Ansprüche, wobei der antihermitische Operator Q ein Polynom eines Impulsoperators ist.

7. Verfahren nach Anspruch 6, wobei die partielle Differentialgleichung die Black-Scholes-Gleichung $\frac{\partial C}{\partial t} = rS \frac{\partial C}{\partial S} + \frac{1}{2} {σ}^{2} {S}^{2} \frac{{\partial }^{2} C}{\partial {S}^{2}} = rC ,$ ist,
wobei S ≥ 0 der Wert der zugrunde liegenden Aktie ist, r der konstante risikofreie Zinssatz ist, σ die konstante Volatilität der Aktie ist und die Randbedingung durch C(S, T) = max{K-S, 0} für ein K ≥ 0 zum Fälligkeitszeitpunkt T gegeben ist.

8. Verfahren nach Anspruch 7, wobei die Kodierung der Randbedingung eine Kodierung der Randbedingung im durch den Zustandsvektor $\left|{φ}_{0}\right〉 = {\sum }_{j = 0}^{{N}_{max}} \frac{K - {e}^{- \frac{{X}_{max}}{2} + j ⋅ {δ}_{x}}}{\sqrt{Λ}} \left(\left|{x}_{j}\right〉+\left|{x}_{{n}_{Q} - 1 - j}\right〉\right)$ dargestellten Zustand umfasst, wobei ${N}_{max} = \left[\left({n}_{Q}-1\right)\left(\frac{log \left(K\right)}{2 {X}_{max}}+\frac{1}{4}\right)\right] , Λ = 2 {\sum }_{j = 0}^{{N}_{max}} {\left(K-{e}^{- \frac{{X}_{max}}{2} + j ⋅ {δ}_{x}}\right)}^{2}$ ein Normierungsfaktor ist, ${δ}_{x} = \frac{2 {X}_{max}}{{n}_{Q} - 1}$ und Xₘₐₓ = 2log(3K).

9. Verfahren nach einem der vorangehenden Ansprüche, wobei der Quantencomputer ein supraleitender Quantencomputer ist.

10. Vorrichtung (1) zur Lösung einer partiellen Differentialgleichung für eine Funktion f, die mindestens einen Unterraum eines k-dimensionalen reellen Raums ${ℝ}^{k}$ in mindestens einen Unterraum eines m-dimensionalen reellen Raums ${ℝ}^{m}$ abbildet, f: ${ℝ}^{k} \to {ℝ}^{m}$, f: (t, X) → f(t, X), wobei $t ∈ ℝ , X ∈ {ℝ}^{k - 1}$, wobei die partielle Differentialgleichung in der Form $\frac{\partial f}{\partial t} = - iQf$ darstellbar ist, mit einer gegebenen Randbedingung f(t₀, X) = g(X) für ein ${t}_{0} ∈ ℝ$, wobei g mindestens einen Unterraum des k-dimensionalen reellen Raums ${ℝ}^{k}$ auf mindestens einen Unterraum des Raums R reeller Zahlen abbildet, wobei Q ein linearer, nicht-hermitischer Operator ist, der als Summe eines antihermitischen Teils A und eines optionalen hermitischen Teils H₀ darstellbar ist, so dass der optionale hermitische Teil H₀ und der antihermitische Teil A kommutieren, wobei X gemäß einem Gitter aus n_{Q} = 2^{N} Punkten, ${\left\{{X}_{i}\right\}}_{i = 1}^{{n}_{Q}}$, diskretisiert wird, wobei ${X}_{i} ∈ {ℝ}^{k - 1}$, wobei die Vorrichtung Folgendes umfasst:
einen Quantencomputer, der Folgendes umfasst:
ein Qubit-System (2) mit N System-Qubits (q₁, ..., q_{N}) und einem ersten Hilfsqubit (q_{E});
einem Mittel (4) zur Vorbereitung des Quantenzustands, um das Qubit-System (2) in einen Anfangszustand zu versetzen, der durch den Zustandsvektor |Φ₀〉 = |φ₀〉 ⊗ |0_{E}〉 gegeben ist, wobei $\left|{φ}_{0}\right〉 = {\sum }_{i = 0}^{{n}_{Q} - 1} {φ}_{i} \left|{x}_{i}\right〉$ ein Zustandsvektor der N System-Qubits (q₁, ..., q_{N}) ist, der die Randbedingung unter Verwendung von höchstens n_{Q} Basis-Zustandsvektoren |xᵢ〉 der N System-Qubits (q₁, ..., q_{N}) in den Koeffizienten *φᵢ* des Anfangszustandsvektors |φ₀〉 der N System-Qubits (q₁, ..., q_{N}) kodiert, und zwar als ${φ}_{i} = \frac{g \left({X}_{i}\right)}{\sqrt{Λ}}$, wobei $Λ = {\sum }_{i = 0}^{{n}_{Q} - 1} {\left|g\left({X}_{i}\right)\right|}^{2}$, oder als $\left|{φ}_{0}\right〉 = {\sum }_{j = 0}^{\frac{{n}_{Q}}{2} - 1} \frac{g \left({X}_{j}\right)}{\sqrt{Λ}} \left(\left|{x}_{j}\right〉+\left|{x}_{{n}_{Q} - 1 - j}\right〉\right)$, wobei $Λ = 2 {\sum }_{j = 0}^{{n}_{Q} / 2 - 1} {\left|g\left({X}_{j}\right)\right|}^{2}$, und wobei |0_{E}〉 einer von zwei Basiszustandsvektoren des ersten Hilfsqubits (q_{E}) und ein Eigenvektor der Pauli-Z-Matrix ist;
ein Mittel (5) zum Implementieren einer Hamilton-Evolution 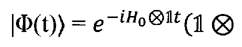 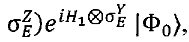 , wobei H₀ der hermitische Teil des Operators Q als erster Hamilton-Operator und H₁ = arccos(e^{-iAt}) als zweiter Hamilton-Operator ist, und wobei ${σ}_{E}^{Z}$ und ${σ}_{E}^{Y}$ die Pauli-Z-Matrix bzw. die Pauli-Y-Matrix sind, die auf das erste Hilfsqubit (q_{E}) wirken, wobei der Term 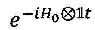 in der Hamilton-Evolution fehlt, wenn Q antihermitisch ist
ein Projektionsmittel (6) zum Projizieren des Zustands des ersten Hilfsqubits (q_{E}) in den durch den Zustandsvektor |0_{E}〉 gegebenen Zustand sowie ein Messmittel zum Messen des Zustands der N System-Qubits (q₁, ..., q_{N}) in der Basis der Basiszustandsvektoren |*xᵢ*〉, *i =* 0, *..., n_{Q} -* 1;
ein Nachselektionsmittel zum Nachselektieren des N-Qubit-Zustands der N System-Qubits (q₁, ..., q_{N}) nach der Messung des ersten Hilfsqubits (q_{E}) unter der Bedingung, dass sich das erste Hilfsqubit (q_{E}) im durch den Zustandsvektor |0_{E}〉 gegebenen Zustand befindet;
wobei die Vorrichtung ferner ein klassisches Datenverarbeitungsmittel umfasst, um zu einem gegebenen Zeitpunkt T die Lösung f(T, Xᵢ) aus einer Messung des gemessenen N-Qubit-Zustands der N System-Qubits (q₁, ..., q_{N}) über die Beziehung $f \left(T, {X}_{i}\right) = \sqrt{p \left(\left.{X}_{i}\right|{0}_{E}\right) Λ}$ zu erhalten, wobei *p*(*Xᵢ*|0*_{E}*) die bedingte Wahrscheinlichkeit ist, den durch den Zustandsvektor |xᵢ〉 gegebenen Zustand zu messen, unter der Bedingung, dass sich das erste Hilfsqubit (q_{E}) im durch den Zustandsvektor |0_{E}〉 gegebenen Zustand befindet, und A die Normierungskonstante des Zustandsvektors |*φ*₀〉 ist.

11. Vorrichtung nach Anspruch 10, wobei das Qubit-System (2) ferner ein zweites Hilfsqubit (q_{G}) umfasst, um die Hamilton-Evolution gemäß dem ersten und/oder zweiten Hamilton-Operator in ein Qubit-System einzubetten, das das zusätzliche zweite Hilfsqubit (q_{G}) umfasst.

12. Vorrichtung nach Anspruch 10 oder 11, wobei die Qubits des Qubit-Systems (2) supraleitende Qubits sind.

## Revendications

1. Procédé mis en œuvre par un ordinateur quantique pour résoudre une équation aux dérivées partielles pour une fonction f qui applique au moins un sous-espace d'un espace réel de dimension k ${ℝ}^{k}$ dans au moins un sous-espace d'un espace réel de dimension m ${ℝ}^{m} , f : {ℝ}^{k} \to {ℝ}^{m}$ , f: (t, X) → f(t, X), où $t ∈ ℝ , X ∈ {ℝ}^{k - 1}$, ladite équation aux dérivées partielles étant représentable sous la forme $\frac{\partial f}{\partial t} = - iQf$ avec une condition aux limites donnée f(t₀, X) = g(X) pour quelque ${t}_{0} ∈ ℝ$, étant entendu que g applique au moins un sous-espace de l'espace réel de dimension k ${ℝ}^{k}$ sur au moins un sous-espace de l'espace R de nombres réels, étant entendu que Q est un opérateur linéaire non hermitien représentable sous la forme de la somme d'une partie anti-hermitienne A et d'une partie hermitienne facultative H₀, qui sont telles que la partie hermitienne facultative H₀ et la partie anti-hermitienne A commutent, étant entendu que X est discrétisé selon un maillage de n_{Q} = 2^{N} points, ${\left\{{X}_{i}\right\}}_{i = 1}^{{n}_{Q}}$, où ${X}_{i} ∈ {ℝ}^{k - 1}$, le procédé comprenant les étapes suivante :
i) préparation d'un système de qubits d'un ordinateur quantique, le système de qubits comprenant N qubits système (q₁, ..., q_{N}) et un premier qubit auxiliaire (q_{E}) dans un état initial donné par un vecteur d'état |Φ₀〉 = |*φ*₀〉⊗ |0_{E}〉, où $\left|{φ}_{0}\right〉 = {\sum }_{i = 0}^{{n}_{Q} - 1} {φ}_{i} \left|{x}_{i}\right〉$ est un vecteur d'état des N qubits système (q₁, ..., q_{N}) codant la condition aux limites en utilisant au plus n_{Q} vecteurs d'état de base |xᵢ〉 des N qubits système (q₁, ..., q_{N}) dans les coefficients *φᵢ* du vecteur d'état initial |*φ*₀〉 des N qubits système (q₁, ..., q_{N}) sous la forme ${φ}_{i} = \frac{g \left({X}_{i}\right)}{\sqrt{Λ}}$ où $Λ = {\sum }_{i = 0}^{{n}_{Q} - 1} {\left|g\left({X}_{i}\right)\right|}^{2}$ ou sous la forme $\left|{φ}_{0}\right〉 = {\sum }_{j = 0}^{\frac{{n}_{Q}}{2} - 1} \frac{g \left({X}_{j}\right)}{\sqrt{Λ}} \left(\left|{x}_{j}\right〉+\left|{x}_{{n}_{Q} - 1 - j}\right〉\right)$ où $Λ = 2 {\sum }_{j = 0}^{{n}_{Q} / 2 - 1} {\left|g\left({X}_{j}\right)\right|}^{2}$, et |0_{E}〉 est l'un des deux vecteurs d'état de base du premier qubit auxiliaire (q_{E}) et un vecteur propre de la matrice Z de Pauli ;
ii) mise en œuvre d'une évolution hamiltonienne 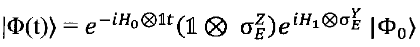 sur l'ordinateur quantique, H₀ étant la partie hermitienne de l'opérateur Q comme premier hamiltonien et H₁ = arccos(e^{-iAt}) comme deuxième hamiltonien, et ${σ}_{E}^{Z}$ et ${σ}_{E}^{Y}$ étant respectivement la matrice Z et la matrice Y de Pauli, agissant sur le premier qubit auxiliaire (q_{E}), le terme 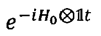 étant absent dans l'évolution hamiltonienne lorsque Q est anti-hermitien ;
iii) mesure de l'état du premier qubit auxiliaire et post-sélection de l'état des N qubits système (q₁, ..., q_{N}) après la mesure, à condition que le premier qubit auxiliaire (q_{E}) soit dans l'état donné par le vecteur d'état |0_{E}〉 afin d'obtenir, à un instant T donné, la solution f(T, Xᵢ) à partir de la mesure de l'état post-sélectionné des N qubits système (q₁, ..., q_{N}), la mesure dudit état post-sélectionné des N qubits système (q₁, ..., q_{N}) comprenant une mesure dans la base des vecteurs d'état de base |xᵢ〉, i = 0, ..., n_{Q}-1 permettant d'obtenir la solution f(T, Xᵢ) par le biais de la relation $f \left(T, {X}_{i}\right) = \sqrt{p \left({X}_{i}\left|{0}_{E}\right.\right) Λ}$ où p(Xᵢ|0_{E}) est la probabilité conditionnelle de mesurer l'état donné par le vecteur d'état |xᵢ〉 conditionné par le fait que le premier qubit auxiliaire (q_{E}) soit dans l'état donné par le vecteur d'état |0_{E}〉 et A est la constante de normalisation du vecteur d'état |*φ*₀〉.

2. Procédé selon la revendication 1, dans lequel l'ordinateur quantique est un ordinateur quantique numérique et le procédé comprend la mise en œuvre de l'évolution hamiltonienne sur l'ordinateur quantique numérique à l'aide d'un ensemble universel de portes à un et deux qubits.

3. Procédé selon l'une quelconque des revendications précédentes, dans lequel le premier et/ou le deuxième hamiltonien H₀ et H₁ sont diagonalisables par une transformée de Fourier quantique F, c'est-à-dire ${H}_{α}^{\left(k\right)} = {FH}_{α} {F}^{†} = {\sum }_{{s}_{1} … {s}_{N} = 0}^{1} {h}_{{s}_{1} … {s}_{N}}^{\left(α\right)} \left|{s}_{1}…{s}_{N}\right〉 \left〈{s}_{1}…{s}_{N}\right|$ où $α = 0 , 1 , {h}_{{s}_{1} … {s}_{N}}^{\left(α\right)}$ est réel, et ${\left(-t\right)}^{1 - α} {H}_{α}^{\left(k\right)} = {\sum }_{{j}_{1} … {j}_{N} = 0}^{1} {β}_{{j}_{1} … {j}_{N}}^{\left(α\right)} {σ}_{1}^{{j}_{1}} ⊗ … ⊗ {σ}_{N}^{{j}_{N}}$ où 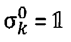 est l'identité et ${σ}_{k}^{1} = {σ}_{k}^{Z}$ est la matrice Z de Pauli agissant sur le qubit *qₖ,* pour tous les k = 1, ...N, et ${β}_{{j}_{1} … {j}_{N}}^{\left(α\right)} = \frac{{\left(-t\right)}^{1 - α}}{{n}_{Q}} {\sum }_{{s}_{1} … {s}_{N} = 0}^{1} {h}_{{s}_{1} … {s}_{N}}^{\left(α\right)} ⋅ {\left(-1\right)}^{{\sum }_{l = 1}^{N} {s}_{l} {j}_{l}}$ , et dans lequel la mise en œuvre de l'évolution hamiltonienne comprend une mise en œuvre de la transformée de Fourier quantique.

4. Procédé selon la revendication 3, dans lequel le premier hamiltonien H₀ est diagonalisable par une transformée de Fourier quantique, et le procédé comprend en outre, à l'étape ii), la préparation d'un système de qubits comprenant les N qubits système (q₁ , ..., q_{N}), le premier qubit auxiliaire (q_{E}) et un deuxième qubit auxiliaire (q_{G}) dans l'état initial donné par le vecteur d'état |Φ₀〉 = |φ₀〉 ⊗ |0_{E}〉⊗ |0_{G}〉, où |0_{G}〉 est l'un des deux vecteurs d'état de base du deuxième qubit auxiliaire (q_{G}) et un vecteur propre de la matrice Z de Pauli, et où la mise en œuvre de l'évolution hamiltonienne selon le premier hamiltonien H₀ à l'étape iii) comprend les étapes suivantes :
1) application de la transformée de Fourier quantique aux N qubits système (q₁, ..., q_{N}), puis
2) pour chaque tuple (*j₁* ... *j_{N}*), où *jₖ =* 0 ou 1 pour k = 1, ..., N :
a) pour chaque k = 1, ..., N pour lequel jₖ = 1, application d'une porte CNOT entre le deuxième qubit auxiliaire (q_{G}) comme qubit cible et le qubit système *qₖ* comme qubit de contrôle, puis
b) application d'une rotation ${R}_{Z} \left({β}_{{j}_{1} … {j}_{N}}^{\left(0\right)}\right) = {e}^{{jβ}_{{j}_{1} … {j}_{N}}^{\left(0\right)} {σ}_{G}^{Z}}$ au deuxième qubit auxiliaire (q_{G}), où ${β}_{{j}_{1} … {j}_{N}}^{\left(0\right)} = \frac{\left(-t\right)}{{n}_{Q}} {\sum }_{{s}_{1} … {s}_{N} = 0}^{1} {h}_{{s}_{1} … {s}_{N}}^{\left(0\right)} ⋅ {\left(-1\right)}^{{\sum }_{l = 1}^{N} {s}_{l} {j}_{l}}$, puis
c) pour chaque k = 1, ..., N pour lequel jₖ = 1, application d'une porte CNOT entre le deuxième qubit auxiliaire (q_{G}) comme qubit cible et le qubit système *qₖ* comme qubit de contrôle, puis
3) application de l'inverse de la transformée de Fourier quantique aux N qubits système (q₁, ..., q_{N}).

5. Procédé selon la revendication 3 ou 4, dans lequel le deuxième hamiltonien H₁ est diagonalisable par une transformée de Fourier quantique, et le procédé comprend en outre, à l'étape ii), la préparation d'un système de qubits comprenant les N qubits système (q₁, ..., q_{N}), le premier qubit auxiliaire (q_{E}) et un deuxième qubit auxiliaire (q_{G}) dans l'état initial donné par le vecteur d'état |Φ₀〉 = |φ₀〉 ⊗ |0_{E}〉⊗ |0_{G}〉, où |0_{G}〉 est l'un des deux vecteurs d'état de base du deuxième qubit auxiliaire (q_{G}) et un vecteur propre de la matrice Z de Pauli, et où la mise en œuvre de l'évolution hamiltonienne selon le deuxième hamiltonien H₁ à l'étape iii) comprend les étapes suivantes :
1) application de la transformée de Fourier quantique aux N qubits système (q₁, ..., q_{N}), puis
2) application du conjugué complexe de la porte de phase suivie de la porte de Hadamard au premier qubit auxiliaire (q_{E}), puis
3) pour chaque tuple (*j₁* ...*j_{N}*), où *jₖ=* 0 ou 1 pour k = 1, ..., N :
a) application d'une porte CNOT entre le deuxième qubit auxiliaire (q_{G}) comme qubit cible et le premier qubit auxiliaire (q_{E}) comme qubit de contrôle, et pour chaque k = 1, ..., N pour lequel jₖ = 1, application d'une porte CNOT entre le deuxième qubit auxiliaire q_{G} comme qubit cible et le qubit système *qₖ* comme qubit de contrôle, puis
b) application d'une rotation ${R}_{Z} \left({β}_{{j}_{1} … {j}_{N}}^{\left(1\right)}\right) = {e}^{{jβ}_{{j}_{1} … {j}_{N}}^{\left(1\right)} {σ}_{G}^{Z}}$ au deuxième qubit auxiliaire (q_{G}), où ${β}_{{j}_{1} … {j}_{N}}^{\left(1\right)} = \frac{1}{{n}_{Q}} {\sum }_{{s}_{1} … {s}_{N} = 0}^{1} {h}_{{s}_{1} … {s}_{N}}^{\left(1\right)} ⋅ {\left(-1\right)}^{{\sum }_{l = 1}^{N} {s}_{l} {j}_{l}}$, puis
c) application d'une porte CNOT entre le deuxième qubit auxiliaire (q_{G}) comme qubit cible et le premier qubit auxiliaire (q_{E}) comme qubit de contrôle, et pour chaque k = 1, ..., N pour lequel jₖ = 1, application d'une porte CNOT entre le deuxième qubit auxiliaire (q_{G}) comme qubit cible et le qubit système *qₖ* comme qubit de contrôle, puis
4) application de la porte de Hadamard H suivie de la porte de phase S au premier qubit auxiliaire (q_{E}),
5) application de l'inverse de la transformée de Fourier quantique aux N qubits système (q₁, ..., q_{N}).

6. Procédé selon l'une quelconque des revendications précédentes, dans lequel l'opérateur anti-hermitien Q est un polynôme d'un opérateur impulsion.

7. Procédé selon la revendication 6, dans lequel l'équation aux dérivées partielles est l'équation de Black-Scholes $\frac{\partial C}{\partial t} + rS \frac{\partial C}{\partial S} + \frac{1}{2} {σ}^{2} {S}^{2} \frac{{\partial }^{2} C}{\partial {S}^{2}} = rC$ où S ≥ 0 représente la valeur de l'action sous-jacente, r est le taux d'intérêt sans risque constant, σ est la volatilité constante de l'action, et la condition aux limites est donnée par C(S,T) = max{K-S, 0} pour quelque K ≥ 0 à l'échéance T.

8. Procédé selon la revendication 7, dans lequel l'encodage de la condition aux limites comprend un encodage de la condition aux limites dans l'état représenté par le vecteur d'état $\left|{φ}_{0}\right〉 = {\sum }_{j = 0}^{{N}_{max}} \frac{K - {e}^{- \frac{{X}_{max}}{2} + j ⋅ {δ}_{x}}}{\sqrt{Λ}} \left(\left|{x}_{j}\right〉+\left|{x}_{{n}_{Q} - 1 - j}\right〉\right)$ où ${N}_{max} = \left[\left({n}_{Q}-1\right)\left(\frac{log \left(K\right)}{2 {X}_{max}}+\frac{1}{4}\right)\right] , Λ = 2 {\sum }_{j = 0}^{{N}_{max}} {\left(K-{e}^{- \frac{{X}_{max}}{2} + j ⋅ {δ}_{x}}\right)}^{2}$ est un facteur de normalisation, ${δ}_{x} = \frac{2 {X}_{max}}{{n}_{Q} - 1}$ et Xₘₐₓ = 2log(3K).

9. Procédé selon l'une quelconque des revendications précédentes, dans lequel l'ordinateur quantique est un ordinateur quantique supraconducteur.

10. Appareil (1) permettant de résoudre une équation aux dérivées partielles pour une fonction f qui applique au moins un sous-espace d'un espace réel de dimension k ${ℝ}^{k}$ dans au moins un sous-espace d'un espace réel de dimension m ${ℝ}^{m} , f : {ℝ}^{k} \to {ℝ}^{m}$, f: (t, X) → f(t, X), où $t ∈ ℝ , X ∈ {ℝ}^{k - 1}$ , ladite équation aux dérivées partielles étant représentable sous la forme $\frac{\partial f}{\partial t} = - iQf$ avec une condition aux limites donnée f(t₀, X) = g(X) pour quelque ${t}_{0} ∈ ℝ$, étant entendu que g applique au moins un sous-espace de l'espace réel de dimension k ${ℝ}^{k}$ sur au moins un sous-espace de l'espace 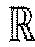 des nombres réels, étant entendu que Q est un opérateur linéaire non hermitien représentable sous la forme de la somme d'une partie anti-hermitienne A et d'une partie hermitienne facultative H₀, qui sont telles que la partie hermitienne facultative H₀ et la partie anti-hermitienne A commutent, étant entendu que X est discrétisé selon un maillage de n_{Q} = 2^{N} points, ${\left\{{X}_{i}\right\}}_{i = 1}^{{n}_{Q}}$, où ${X}_{i} ∈ {ℝ}^{k - 1}$, l'appareil comprenant :
un ordinateur quantique comprenant :
un système de qubits (2) comprenant N qubits système (q₁, ..., q_{N}) et un premier qubit auxiliaire (q_{E}),
un moyen de préparation d'état quantique (4) pour préparer le système de qubits (2) dans un état initial donné par un vecteur d'état |Φ₀〉 = |φ₀〉 ⊗ |0_{E}〉, où $\left|{φ}_{0}\right〉 = {\sum }_{i = 0}^{{n}_{Q} - 1} {φ}_{i} \left|{x}_{i}\right〉$ est un vecteur d'état des N qubits système (q₁, ..., q_{N}) codant la condition aux limites en utilisant au plus n_{Q} vecteurs d'état de base |xᵢ〉 des N qubits système (q₁, ..., q_{N}) dans les coefficients *φᵢ* du vecteur d'état initial |*φ*₀〉 des N qubits système (q₁, ..., q_{N}) sous la forme ${φ}_{i} = \frac{g \left({X}_{i}\right)}{\sqrt{Λ}}$ où $Λ = {\sum }_{i = 0}^{{n}_{Q} - 1} {\left|g\left({X}_{i}\right)\right|}^{2}$ ou sous la forme $\left|{φ}_{0}\right〉 = {\sum }_{j = 0}^{\frac{{n}_{Q}}{2} - 1} \frac{g \left({X}_{j}\right)}{\sqrt{Λ}} \left(\left|{x}_{j}\right〉+\left|{x}_{{n}_{Q} - 1 - j}\right〉\right)$ où $Λ = 2 {\sum }_{j = 0}^{{n}_{Q} / 2 - 1} {\left|g\left({X}_{j}\right)\right|}^{2}$, et |0_{E}〉 est l'un des deux vecteurs d'état de base du premier qubit auxiliaire (q_{E}) et un vecteur propre de la matrice Z de Pauli,
un moyen de mise en œuvre (5) pour mettre en œuvre une évolution hamiltonienne 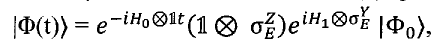 , sur l'ordinateur quantique, H₀ étant la partie hermitienne de l'opérateur Q comme premier hamiltonien et H₁ = arccos(e^{-iAt}) comme deuxième hamiltonien, et ${σ}_{E}^{Z}$ et ${σ}_{E}^{Y}$ étant respectivement la matrice Z et la matrice Y de Pauli, agissant sur le premier qubit auxiliaire (q_{E}), le terme 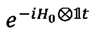 étant absent dans l'évolution hamiltonienne lorsque Q est anti-hermitien,
un moyen de projection (6) pour projeter l'état du premier qubit auxiliaire (q_{E}) dans l'état donné par le vecteur d'état |0_{E}〉, et un moyen de mesure pour mesurer l'état des N qubits système (q₁, ..., q_{N}), dans la base des vecteurs d'état de base |*xᵢ*〉, *i =* 0, ... , *n_{Q} -* 1;
un moyen de post-sélection pour post-sélectionner l'état des N qubits système (q₁, ..., q_{N}) après la mesure du premier qubit auxiliaire (q_{E}) à la condition que le premier qubit auxiliaire (q_{E}) soit dans l'état donné par le vecteur d'état |0_{E}〉 ;
ledit appareil comprenant en outre un moyen de traitement de données classique pour obtenir, à un instant T donné, la solution f(T, Xᵢ) à partir d'une mesure de l'état mesuré des N qubits système (q₁, ..., q_{N}) par le biais de la relation $f \left(T, {X}_{i}\right) = \sqrt{p \left(\left.{X}_{i}\right|{0}_{E}\right) Λ}$, où *p*(*Xᵢ*|0*_{E}*) est la probabilité conditionnelle de mesurer l'état donné par le vecteur d'état |xᵢ〉 conditionné par le fait que le premier qubit auxiliaire (q_{E}) soit dans l'état donné par le vecteur d'état |0_{E}〉 et A est la constante de normalisation du vecteur d'état |*φ*₀〉.

11. Appareil selon la revendication 10, dans lequel le système de qubits (2) comprend en outre un deuxième qubit auxiliaire (q_{G}) pour intégrer l'évolution hamiltonienne selon le premier et/ou le deuxième hamiltonien dans un système de qubits comprenant le deuxième qubit auxiliaire supplémentaire (q_{G}).

12. Appareil selon la revendication 10 ou 11, dans lequel les qubits du système de qubits (2) sont des qubits supraconducteurs.
